# EUROPÄISCHE PATENTSCHRIFT

(11) **EP 4 092 306 B1**
(45) Veröffentlichungstag und Bekanntmachung des Hinweises auf die Patenterteilung: **16.04.2025**
(21) Anmeldenummer: 22170398.6
(22) Anmeldetag: 28.04.2022
(51) Int. Cl.: F16L 27/10

(54) **ROHRVERBINDER UND ANORDNUNG EINES ROHRVERBINDERS MIT MINDESTENS ZWEI ROHREN**
PIPE CONNECTOR AND ARRANGEMENT OF A PIPE CONNECTOR WITH AT LEAST TWO PIPES
RACCORD ET AGENCEMENT D'UN RACCORD POURVU D'AU MOINS DEUX TUBES

(30) Priorität: 21.05.2021 DE 102021113246
(43) Veröffentlichungstag der Anmeldung: 23.11.2022
(73) Patentinhaber: Naber Holding GmbH & Co. KG, 48529 Nordhorn (DE)
(72) Erfinder: Naber, Hans-Joachim, 48527 Nordhorn (DE)
(74) Vertreter: Angerhausen, Christoph

(56) Entgegenhaltungen:
- DE-A1- 102016 220 527
- DE-A1- 2 944 984
- DE-U1- 202006 006 756
- US-A- 5 163 718

## Beschreibung

Die Erfindung betrifft einen Rohrverbinder mit den Merkmalen des Oberbegriffs des Anspruchs 1.

Derartige Rohrverbinder werden beispielsweise im Küchenbau verwendet, um Rohre eines Rohrsystems miteinander zu verbinden. Mit dem System können beispielsweise von einer Dunstabzugshaube angesaugte Dämpfe oder Wrasen zu einem Mauerkasten und damit aus der Küche hinaustransportiert werden. Ein Rohrverbinder ist beispielsweise aus der EP 2 759 779 A1 oder der DE 29 44 984 A1 bekannt. Die DE 10 2016 220527 A1 offenbart ein Bogenelement für ein Lüftungssystem.

Üblicherweise werden die mit dem Rohrverbinder zu verbindenden Rohre in den Rohrverbinder eingesteckt, um so eine fluidische Verbindung der Rohre zu erzeugen. Allerdings können dabei Leckagen und Undichtigkeiten entstehen, insbesondere dann, wenn die zu verbindenden Rohre nicht exakt ausgerichtet sind. Damit können aus der Küche zu entfernende Dämpfe oder Wrasen aus dem Rohrsystem austreten.

Es ist deshalb die Aufgabe der vorliegenden Erfindung, einen Rohrverbinder bereitzustellen, der eine bessere Leckagedichtung aufweist. Weiterhin wird eine Anordnung eines Rohrverbinders mit mindestens zwei damit verbundenen Rohren bereitgestellt. Vorteilhafte Ausführungsformen sind Gegenstand der Unteransprüche.

Erfindungsgemäß weist der Rohrverbinder einen zwischen der ersten und der zweiten Einführöffnung angeordneten flexiblen Bereich aus einem verformbaren, stauchbaren oder dehnbaren und/oder elastischen Material auf, so dass die erste Aufnahme relativ zu der zweiten Aufnahme translatorisch und/oder rotatorisch verlagerbar ist, wobei der flexible Bereich zumindest abschnittsweise einen Balg aufweist oder ist.

Durch den flexiblen Bereich werden durch Versatz oder Verdrehung der zu verbindenden Rohre hervorgerufene Spannungen in den Rohren, dem Rohrverbinder und insbesondere an der Verbindungsstelle eines Rohrs mit dem Rohrverbinder vermieden, so dass ein Lösen der Verbindung und/oder Verbindungsspalte effektiv vermieden werden. Der Rohrverbinder kann durch den flexiblen Bereich einen Rohrversatz überbrücken. Damit ergibt sich eine verbesserte Abdichtung gegen Leckage. Der flexible Bereich kann aus einem Kunststoff bestehen oder einen solchen aufweisen. Der flexible Bereich kann beispielsweise ein Elastomer, z.B. ein thermoplastisches Elastomer (TPE) sein oder aufweisen. Der flexible Bereich kann z.B. PVC, Polyethylen (PE) und/oder Polypropylen (PP) aufweisen oder daraus bestehen. Der flexible Bereich kann Kautschuk, z.B. Naturkautschuk und/oder Silikonkautschuk, aufweisen oder daraus bestehen. Der flexible Bereich kann Silikon und/oder einen Silikon enthaltenden Stoff aufweisen oder daraus bestehen. Alternativ oder zusätzlich kann der Kunststoff kann z.B. ein Formgedächtnispolymer sein. Wird der Rohrverbinder gelöst, so kann vorgesehen sein, dass der flexible Bereich in eine vorgegebene Form zurückkehrt, d.h. z.B. eine durch die Verbindung hervorgerufene Verformung des flexiblen Bereichs rückgängig gemacht wird.

Die zu verbindenden Rohre können Flachkanäle, Rundrohre oder dergleichen sein. Es kann auch vorgesehen sein, dass der Rohrverbinder einen Flachkanal mit einem Rundrohr oder dergleichen verbinden kann. Die entsprechenden Aufnahmen des Rohrverbinders können an die Geometrie und/oder den Querschnitt der zu verbindenden Rohre angepasst sein. Es kann auch vorgesehen sein, mit dem Rohrverbinder mehr als zwei Rohre miteinander zu verbinden. Der Rohrverbinder kann dazu eine entsprechende Anzahl Aufnahmen aufweisen. Der Rohrverbinder kann eine im Wesentlichen rechteckige und/oder flache Form aufweisen. Der Rohrverbinder kann eine im Wesentlichen runde Form aufweisen.

Mindestens eines der zu verbindenden Rohre kann aus einem Kunststoff, einem Blech oder einem Metall oder eine Metalllegierung bestehen oder ein solches aufweisen. Insbesondere bei Blechrohren kann aufgrund der im Vergleich zu üblichen Kunststoffrohren erhöhten Steifigkeit durch einen erfindungsgemäßen Rohrverbinder eine verbesserte Leckagedichtheit sichergestellt werden.

Der Rohrverbinder kann aus einem Kunststoff, beispielsweise ABS oder PVC, bestehen oder einen solchen aufweisen. Alternativ oder zusätzlich kann der Rohrverbinder aus einem Metall oder Blech bestehen oder ein solches aufweisen. Der Rohrverbinder kann eine Shore A-Härte von 30 - 50 aufweisen. Bei einer derartigen Shore A-Härte kann der Rohrverbinder ein besseres Rohreinschubverhalten haben bzw. das Einschieben eines Rohrs in den Rohrverbinder erleichtert sein.

Der Rohrverbinder kann mindestens ein Halteelement aufweisen, das dazu eingerichtet sein kann, ein in die erste und/oder die zweite Aufnahme eingeführtes Rohr zumindest abschnittsweise oder punktuell mit dem Rohrverbinder zu fixieren. Das Haltelement kann bevorzugt an oder bei dem Anschlag zumindest abschnittsweise angeordnet sein. Damit kann ein oben beschriebener Rohrverbinder mit flexiblem Bereich auch ein entsprechendes Halteelement aufweisen. Das Halteelement kann einstückig mit dem Anschlag ausgebildet sein. Der Rohrverbinder kann mehrere Halteelemente aufweisen. Die Halteelemente können regelmäßig zueinander beabstandet sein. Damit können die beabstandeten Halteelemente einzelne oder separate Elemente sein. Insbesondere kann vorgesehen sein, dass ein Halteelement nicht durch eine vollständig an der Innenseite des Rohrverbinders umlaufende Nut oder dergleichen gebildet ist. Damit kann die Durchströmung durch den Rohrverbinder verbessert sein, da sich keine umlaufende Ablösekante durch das Halteelement ergibt, bei gleichzeitig guter Verbindung des Rohrs mit dem Rohrverbinder. Ein Haltelement kann z.B. eine Breite von 1/50 bis 1/10 des Innenumfangs des Rohrverbinders oder Aufnahme, einer Innenseite des Rohrverbinders oder Aufnahme und/oder des Anschlags aufweisen. Es kann aber auch vorgesehen sein, dass mindestens ein Halteelement an, bei oder mit dem Anschlag zumindest abschnittsweise über einen weiten Bereich umlaufend ausgebildet ist. In diesem Falle kann ein Haltelement z.B. eine Breite von mehr als 1/10 (aber bevorzugt weniger als 1/1) des Innenumfangs des Rohrverbinders oder der Aufnahme und/oder des Anschlags aufweisen. Ist die erste und/oder die zweite Aufnahme im Wesentlichen rechteckig bzw. weist eine im Wesentlichen rechteckige Form auf, z.B. für Flachkanäle, so kann vorgesehen sein, dass Halteelemente nur an den beiden längeren Seiten angeordnet sind. Das Halteelement kann in die erste und/oder zweite Aufnahme hineinragen. Es kann vorgesehen sein, dass das Halteelement sich nicht über die komplette erste und/oder zweite Aufnahme von dem Anschlag bis zu der ersten und/oder zweiten Einführöffnung erstreckt, sondern nur teilweise in die jeweilige Aufnahme hineinragt. Somit kann sich eine verbesserte stabile und belastbare Verbindung des Rohrverbinders mit einem Rohr ergeben, und damit eine verbesserte Abdichtung gegen Leckage. Mit "abschnittsweise angeordnetes Halteelement" kann dabei gemeint sein, dass die Breite des an oder bei dem Anschlag angeordneten Halteelements einem einem Abschnitt entsprechenden Bruchteil des Innenumfangs des Rohrverbinders, des Innenumfangs der ersten oder der zweiten Aufnahme oder des Anschlags entsprechen kann. Es kann auch gemeint sein, dass ein Halteelement an oder bei einem Abschnitt des Anschlags angeordnet ist, wobei mindestens ein weiteres Halteelement an oder bei mindestens einem weiteren Abschnitt des Anschlags angeordnet sein kann. Damit kann das Rohr durch das Halteelement abschnittsweise oder punktuell fixiert sein oder werden. Das Halteelement kann z.B. eine Breite von 1/50 bis 1/10 eines Innenumfangs des Rohrverbinders oder Aufnahme und/oder der Innenseite des Rohrverbinders oder Aufnahme und/oder eines Innenumfangs des Anschlags aufweisen. Es kann vorgesehen sein, dass jeweils genau ein Halteelement an einer, mehrerer oder allen Innenseiten des Rohrerbinders angeordnet ist. Das Halteelement kann einstückig mit dem Anschlag ausgeführt sein. Das Halteelement kann eine Klammer oder dergleichen sein oder aufweisen, bzw. klammerartig sein. Es kann vorgesehen sein, dass an dem Anschlag auch mehr als ein Halteelement angeordnet ist. Beispielsweise können genau zwei (oder mehr) Halteelemente je Anschlag vorgesehen sein. Die Halteelemente können entlang des Anschlags, z.B. bezogen auf eine Symmetrieachse des Rohrverbinders, symmetrisch angeordnet und/oder verteilt sein. Durch die zwei oder mehr Halteelemente kann eine konkave Durchbiegung des Rohrverbinders und/oder eines aufgenommenen Rohrs verringert werden. Zudem kann auch die Dichtigkeit erhöht werden. Gleichermaßen kann eine symmetrische Anordnung einer Mehrzahl Halteelemente wirken.

Der Rohrverbinder weist einen zwischen der ersten und der zweiten Einführöffnung angeordneten flexiblen Bereich aus einem verformbaren, stauchbaren oder dehnbaren und/oder elastischen Material auf, so dass die erste Aufnahme relativ zu der zweiten Aufnahme translatorisch und/oder rotatorisch verlagerbar ist. Damit kann ein oben beschriebener Rohrverbinder mit Halteelement auch einen flexiblen Bereich aufweisen. Der flexible Bereich kann aus einem Kunststoff und/oder Gummi bestehen oder einen solchen aufweisen.

Das Halteelement kann eine T-Form, L-Form oder C-Form aufweisen oder dergleichen geformt sein, wobei ein Steg des Halteelements mit der Innenseite des Rohrverbinders eine Rohrendenaufnahme zur Aufnahme eines Rohrendes eines in die erste und/oder die zweite Aufnahme eingeführten Rohrs bilden kann. Der Steg kann in der jeweiligen Aufnahme angeordnet sein und/oder in diese hineinragen. Durch die Rohrendenaufnahme kann eine vergrößerte Kontaktfläche eines aufgenommenen Rohrendes in der Rohrendenaufnahme bereitgestellt sein oder werden. Durch die Aufnahme des Rohrendes in der Rohrendenaufnahme kann eine stabile und sichere Verbindung des Rohrs mit dem Rohrverbinder bereitgestellt sein oder werden.

Mindestens eine der mindestens einen Dichtlippe kann in der Rohrendenaufnahme angeordnet sein. Es können aber auch alle Dichtlippen in der Rohrendenaufnahme angeordnet sein. Bevorzugt kann die mindestens eine Dichtlippe an einer Innenseite des Rohrverbinders und/oder an dem Steg angeordnet sein. Damit kann bei in der Rohrendenaufnahme aufgenommenem Rohrende ein guter und fester Kontakt zwischen Rohrende und Dichtlippe und damit eine gute Abdichtung erreicht werden. Weist der Rohrverbinder mehrere Dichtlippen auf, so können mindestens zwei der Dichtlippen eine unterschiedliche Höhe und/oder Dicke aufweisen. Weist der Rohrverbinder mindestens drei Dichtlippen auf, so können jeweils zwei der Dichtlippen unterschiedlich voneinander beabstandet sein.

Das Halteelement und/oder der Steg kann an einer der Innenseite des Rohrverbinders zugewandten Seite eine Anpressführung aufweisen, so dass ein Querschnitt der Rohrendenaufnahme in Einführrichtung des Rohrendes zumindest abschnittsweise verjüngt ist. Damit kann ein sicherer Sitz des Rohrendes in der Rohrendenaufnahme sichergestellt sowie die Abdichtung verbessert sein oder werden. Es kann aber auch vorgesehen sein, dass die Anpressführung entlang des gesamten Halteelements verläuft, so dass der Querschnitt der Rohrendenaufnahme in Einführrichtung nicht nur abschnittsweise sondern über die gesamte Rohrendenaufnahme verjüngt ist.

Die Anpressführung kann zumindest abschnittsweise relativ zu der Innenseite unter einem Winkel α₁₀₉ geneigt sein. Der Winkel kann 0° ≤ α₁₀₉ ≤ 20° betragen. Der Winkel kann 0° ≤ α₁₀₉ ≤ 15° betragen. Der Winkel α₁₀₉ kann Selbsthemmung bei einem in die Rohraufnahme aufgenommenem Rohrende bewirken.

Das Halteelement kann ein Clips-Element aufweisen, so dass das Halteelement bei in der Rohrendenaufnahme aufgenommenem Rohr über das Clips-Element mit einem entsprechenden komplementären Verbindungselement des Rohrendes und/oder des Rohrs mit dem Rohr lösbar verbunden sein oder werden kann. Damit kann eine gute Abdichtung und eine sichere Verbindung des Rohrs mit dem Rohrverbinder bereitgestellt sein, wobei die Verbindung komfortabel lösbar sein kann bzw. gelöst werden kann.

Der Rohrverbinder kann mindestens ein in der ersten und/oder zweiten Aufnahme bevorzugt an der Innenseite angeordnetes Rastelement aufweisen, das dazu eingerichtet ist, mit einer Rastnase eines in der Aufnahme eingeführten Rohrs das Rohr lösbar mit dem Rohrverbinder zu verbinden. In mindestens einer Ausführungsform kann das Halteelement das Rastelement sein oder aufweisen, wobei vorgesehen sein kann, dass kein Halteelement an oder bei dem Anschlag angeordnet ist. Das Rastelement kann aber auch zusätzlich zu dem Halteelement, beispielsweise in, an oder bei dem Anschlag angeordneten Halteelement, vorgesehen sein. In diesem Falle kann das Rastelement bzw. die Rastverbindung zusätzlich die Verbindung des Rohrs mit dem Rohrverbinder durch das Halteelement unterstützen und/oder verstärken.

Der Rohrverbinder kann mindestens eine in der ersten und/oder zweiten Aufnahme bevorzugt an der Innenseite (angeordnetes Rohrverbinder-Clipselement aufweisen. Mit dem Rohrverbinder-Clipselement kann der Rohrverbinder mit einem in die erste und/oder zweite Aufnahme eingeführten Rohr lösbar verbindbar, bevorzugt verclipsbar, sein.

Der Rohrverbinder kann mindestens eine, bevorzugt mindestens zwei, Symmetrieachsen aufweisen, um die der Rohrverbinder und/oder das Halteelement achsensymmetrisch, spiegelsymmetrisch oder rotationssymmetrisch sein kann. Insbesondere kann vorgesehen sein, dass der Rohrverbinder keine spezifische und/oder bevorzugte Anschlussrichtung und/oder Durchströmrichtung aufweist. Damit kann sich eine erleichterte und schnellere Montage des Rohrverbinder bzw. des zu montierenden Rohrsystems ergeben. Mindestens eine Symmetrieachse kann senkrecht zu der Durchströmrichtung verlaufen. Es kann vorgesehen sein, dass das Haltelement symmetrisch ist bzw. mindestens eine Symmetrieachse aufweist. Die Symmetrieachse des Halteelements kann derart ausgerichtet sein, dass die von dem Halteelement gebildeten Rohrendenaufnahmen und/oder die Anpressführung des Halteelements symmetrisch sind.

Das Verhältnis bzw. der Quotient einer Höhe zu einer Tiefe des Rohrverbinders kann größer gleich 1.25, bevorzugt größer gleich 1.5 sein. Das Verhältnis bzw. der Quotient einer Breite zu einer Tiefe des Rohrverbinders kann größer gleich 2.5, bevorzugt größer gleich 3, sein. Das Verhältnis bzw. der Quotient eines Durchmessers des Rohrverbinders zu einer Tiefe kann größer gleich 1.5 sein, bevorzugt größer gleich 2 sein.. Damit kann sich ein schmaler Rohrverbinder bei gleichzeitig guter Abdichtung bzw. Verbindung der Rohre ergeben.

Der Rohrverbinder kann mindestens jeweils zwei Dichtlippen zwischen Anschlag und erster Aufnahme und zweiter Aufnahme aufweisen, wobei der Abstand der jeweils zwei Dichtlippen zueinander kleiner als eine Länge der Dichtlippen sein kann. Bei einem in den Rohrverbinder aufgenommenem Rohr können sich die jeweiligen Dichtlippen damit überlappen. Damit kann sich eine bessere Abdichtung ergeben.

Der Balg kann ein Faltenbalg sein oder aufweisen.

Der flexible Bereich und/oder der Balg kann Konturen aufweisen. Die Konturen können Falten sein oder aufweisen. Die Konturen können beispielsweise sinusförmig oder eckig sein. Sind die Konturen eckig, kann die Durchströmung durch den Rohrverbinder verglichen mit sinusförmigen Konturen verbessert sein. Es kann vorgesehen sein, dass die Höhe der Konturen größer als der Abstand der Konturen zueinander ist. Sind die Konturen eckig und die Höhe der Konturen größer als ihr jeweiliger Abstand zueinander, kann die Durchströmung durch den Rohrverbinder weiter verbessert sein. Der flexible Bereich und/oder der Balg kann mindestens eine nach außen weisende Kontur aufweisen. Es kann vorgesehen sein, dass der flexible Bereich und/oder der Balg exakt drei nach außen weisende Konturen aufweist. Eine solche Anzahl von drei Konturen kann dabei eine vergleichsweise gute mechanische Stabilität bei gleichzeitig vorhandener Flexibilität ermöglichen. Insbesondere kann bei drei verglichen mit z.B. fünf Konturen ein "Ausweichverhalten", d.h. eine relative Bewegung der Konturen zueinander, verbessert und Druckverluste können verringert werden. Zudem kann eine Krafteinleitung in den flexiblen Bereich bei drei Konturen verglichen mit beispielsweise fünf verbessert werden; bei mittiger Krafteinleitung von dem Rohreinsteckbereich (Muffe) auf den flexiblen Bereich kann sich ein verbessertes Verhalten unter Druckbelastung ergeben, womit ein "Ausweichen" minimiert werden kann.

Die Außenseite des Rohrverbinders kann ein steifes und/oder hartes Material mit einem ersten E-Modul sein oder aufweisen. Die Innenseite des Rohrverbinders kann verglichen mit dem Material der Außenseite ein weiches und/oder nachgiebiges Material mit einem zweiten E-modul sein oder aufweisen. Der erste E-Modul kann größer als der zweite E-Modul sein. Mit E-Modul kann insbesondere ein bzw. der Elastizitätsmodul der jeweiligen Materialen gemeint sein. Der Rohrverbinder kann in einer Zweikomponentenbauweise gefertigt sein und/oder eine solche aufweisen. Durch das steife und/oder harte Material kann der Rohrverbinder eine hohe Stabilität aufweisen. Durch das weiche und/oder nachgiebige Material kann eine gute Abdichtung erzielt sein oder werden. Das harte Material kann ein Kunststoff, z.B. ein thermoplastischer oder duroplastischer Kunststoff, oder ein Metall oder Blech sein oder aufweisen. Das weiche Material kann ein Elastomer, beispielsweise ein thermoplastischer Kunststoff, sein oder aufweisen. Das weiche Material kann ein TPE und/oder ein Silikon sein oder aufweisen. Das Silikon kann ein silikonhaltiger Stoff sein oder aufweisen.

In mindestens einer Ausführungsform kann der Rohrverbinder einen ersten zwischen dem flexiblem Bereich und der Einführungsöffnung der ersten Aufnahme an der Innenseite des Rohrverbinders angeordneten, bevorzugt umlaufenden, Anschlag und einen zweiten zwischen dem flexiblem Bereich und der Einführungsöffnung der zweiten Aufnahme an der Innenseite des Rohrverbinders angeordneten, bevorzugt umlaufenden, Anschlag aufweisen, wobei der Rohrverbinder mindestens ein erstes an oder bei dem ersten Anschlag an der Innenseite zumindest abschnittsweise angeordnetes Halteelement und mindestens ein zweites an oder bei dem zweiten Anschlag an der Innenseite zumindest abschnittsweise angeordnetes Halteelement aufweisen kann. Es kann vorgesehen sein, dass sowohl an dem ersten Anschlag als auch an dem zweiten Anschlag genau zwei (oder mehr) Haltelemente angeordnet sein können.

Der Rohrverbinder kann mindestens zwei an der Innenseite der ersten Aufnahme und/oder der zweiten Aufnahme angeordnete Dichtlippen aufweisen. Damit kann eine sehr gute Leckagedichtheit erzielt werden. Der Rohrverbinder kann mindestens die zweithöchste Dichtheitsklasse (Klasse C) erfüllen. Es kann auch vorgesehen sein, dass die Dichtlippen an, bei und/oder fluidisch vor der Aufnahme angeordnet sind.

Die erste Aufnahme und/oder die zweite Aufnahme kann an einer Außenkante eine bevorzugt umlaufende Einführschräge aufweisen, wobei die Querschnittsfläche der Aufnahme im Bereich der Einführschräge zumindest abschnittsweise verjüngt sein kann. Die Einführungsschräge kann eine Fase sein oder aufweisen. Durch die Einführschräge kann ein Rohr leicht und komfortabel in die Aufnahme eingeführt sein oder werden, insbesondere dann, wenn eine Presspassung des Rohrs in der Aufnahme vorgesehen ist.

Erfindungsgemäß wird eine Anordnung aus einem oben beschriebenen Rohrverbinder und mindestens zwei mit dem Rohrverbinder über die erste und die zweite Aufnahme verbundenen Rohre bereitgestellt, wobei
a. die Längsachsen der beiden Rohre relativ zueinander unter einem Winkel zwischen 1° und 15° ausgerichtet sein können, und/oder
b. die Rohrenden der mit dem Rohrverbinder verbundenen Rohre einen Abstand und/oder Versatz entlang der Längsachse eines oder beider Rohre aufweisen können, der 1 bis 5 cm, bevorzugt 1 bis 2 cm, größer oder kleiner als eine oder die Tiefe des Rohrverbinders sein kann, und/oder
c. die beiden Rohre einen Abstand und/oder Versatz im Wesentlichen senkrecht zu der Längsachse der Rohre zueinander aufweisen können, beispielsweise in Erstreckungsrichtung einer oder der Höhe des Rohrverbinders und/oder einer oder der Breite, der zwischen 1 bis 5 cm, bevorzugt zwischen 1 bis 2 cm betragen kann.

Der Rohrverbinder erlaubt damit insbesondere das Verbinden zweier nicht exakt miteinander ausgerichteten Rohre, ohne dass in dem Verbinder oder der Verbindung Spannungen auftreten. Damit kann eine lange haltende bzw. sich nicht lösende und sichere Verbindung bereitgestellt sein oder werden. Der Rohrverbinder weist einen flexiblen Bereich auf, mit dem der Versatz oder Abstand der beiden Rohre ausgeglichen wird.

Alternativ oder zusätzlich ist erfindungsgemäß eine oder die Anordnung aus einem Rohrverbinder und mindestens zwei mit dem Rohrverbinder über die erste und die zweite Aufnahme verbundenen Rohre bereitgestellt, wobei
a. ein Außenquerschnitt und/oder Außenumfang der Rohre größer als ein Innenquerschnitt mindestens einer der Aufnahmen sein kann, so dass mindestens ein Rohr unter einer Presspassung in der mindestens einen Aufnahmen mit dem Rohrverbinder befestigt sein kann, und/oder
b. mindestens eine der Aufnahmen an einer Innenseite mindestens ein oder das Rastelement und mindestens eines der Rohre mindestens eine oder die komplementäre Rastnase aufweisen kann, wobei das mindestens eine Rohr in der mindestens einen Aufnahme durch die von dem Rastelement und der Rastnase gebildete Rastverbindung mit dem Rohrverbinder lösbar befestigt sein kann, und/oder
c. mindestens eine der Aufnahmen an einer Innenseite (118) mindestens ein oder das Rohrverbinder-Clipselement aufweisen kann, wobei das mindestens eine Rohr in der mindestens einen Aufnahme über das Rohrverbinder-Clipselement mit dem Rohrverbinder verclipst sein kann, und/oder
d. das Halteelement mit einer Innenseite des Rohrverbinders an, bei oder in mindestens einer der Aufnahmen eine oder die Rohrendenaufnahme bilden kann, wobei das in die Aufnahme eingeführte Rohr mit einem oder dem Rohrende in der Rohrendenaufnahme aufgenommen ist, wobei das Rohr mit dem Rohrverbinder über das Rohrende und der Rohrendenaufnahme (formschlüssig oder kraftschlüssig verbunden sein kann, und/oder
e. das Halteelement mindestens ein oder das Clips-Element und mindestens eines der Rohre oder ein Rohrende mindestens eines der Rohre ein oder das mit dem Clips-Element komplementäres Element aufweisen kann, wobei das Rohr mit dem Rohrverbinder über das Clips-Element und das komplementäre Element lösbar verbunden sein kann.

Es sind auch Anordnungen mit beliebigen Kombinationen dieser Verbindungen bzw. Verbindungselemente möglich und denkbar.

Die Erfindung wird anhand der nachfolgenden Figuren genauer erläutert. Dabei zeigt:
- Fig. 1: eine nicht zur Erfindung gehörende Ausführungsform eines Rohrverbinders;
- Fig. 2: die in Fig. 1 gezeigte, nicht zur Erfindung gehörende Ausführungsform eines Rohrverbinders;
- Fig. 3: eine Ausführungsform eines erfindungsgemäßen Rohrverbinders;
- Fig. 4: noch eine nicht zur Erfindung gehörende Ausführungsform eines Rohrverbinders;
- Fig. 5: noch eine Ausführungsform eines erfindungsgemäßen Rohrverbinders;
- Fig. 6: schematische Darstellungen zweier Ausführungsformen eines Halteelements;
- Fig. 7: eine schematische Darstellung eines Halteelements und eines Rohrendes;
- Fig. 8: schematische Darstellungen von Dichtlippen;
- Fig. 9: eine Anordnung eines erfindungsgemäßen Rohrverbinders mit zwei damit verbundenen Rohren;
- Fig. 10: ein beispielhaftes Rohr, das mit einem erfindungsgemäßen Rohrverbinder verbindbar ist;
- Fig. 11: schematische Beispiele verschiedener Anordnungen zweier mit einem (nicht dargestellten) Rohrverbinder verbundenen Rohre;
- Fig. 12: eine weitere Ausführungsform eines erfindungsgemäßen Rohrverbinders; und
- Fig. 13: eine Querschnittsansicht einer Ausführungsform eines erfindungsgemäßen Rohrverbinders.

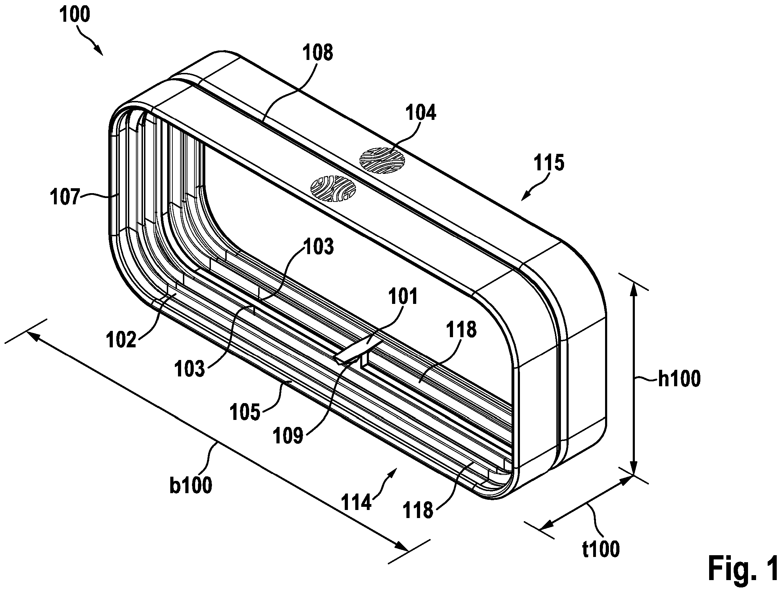

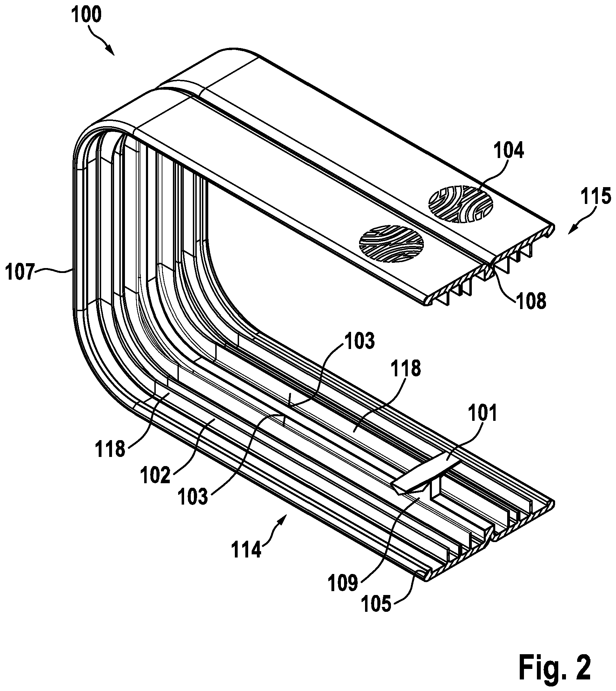

Eine nicht zur Erfindung gehörende Ausführungsform eines Rohrverbinders 100 ist in Figur 1 und 2 dargestellt, wobei der Rohrverbinder 100 einen nicht in Figur 1 und 2 gezeigten flexiblen Bereich 106 aufweist. Der Rohrverbinder 100 weist eine erste Aufnahme 114 zur Aufnahme eines ersten Rohrs bzw. Rohrendes und eine zweite Aufnahme 115 zur Aufnahme eines zweiten Rohrs bzw. Rohrendes auf. Zwischen den beiden Aufnahmen 114, 115 ist ein Anschlag 103 an der Innenseite 118 des Rohrverbinders angeordnet. Der Anschlag 103 kann dabei insbesondere umlaufend angeordnet sein. Durch den Anschlag 103 kann damit eine definierte Einführtiefe eines oder mehrerer Rohre 112 in dem Rohrverbinder 100 bestimmt sein. Ein Rohr 112 kann beispielsweise durch die erste Aufnahme 114 in den Rohrverbinder 100 eingeführt werden, bis das Rohr 112 bzw. dessen Rohrende den Anschlag 103 kontaktiert. Der Anschlag 103 kann damit als Stopper dienen. Zwischen Anschlag 103 und Aufnahme 114, 115 und/oder Einführöffnung der Aufnahme ist mindestens eine oder eine Mehrzahl Dichtlippen 102 an der Innenseite 118 des Rohrverbinders 100 angeordnet. Die Dichtlippen 102 sind bevorzugt umlaufend angeordnet. Bei der in Figur 1 und 2 dargestellten Ausführungsform des Rohrverbinders 100 sind jeweils drei Dichtlippen 102 zwischen der Einführöffnung der ersten Aufnahme 114 und dem Anschlag 103 sowie der Einführöffnung der zweiten Aufnahme 115 und dem Anschlag 103 angeordnet. Die Dichtlippen 102 dichten in den Rohrverbinder 100 eingeführte Rohre 112 fluidisch ab. Sind in die Aufnahme 114, 115 des in Figur 1 dargestellten Rohrverbinder 100 beispielsweise zwei Rohre 112 eingeführt, so sind die beiden Rohre 112 fluidisch dicht miteinander verbunden. Durch die Mehrzahl Dichtlippen 102 des Rohrverbinders 100 wird dabei eine besonders gute Abdichtung erzielt. Beispielsweise übersteigt der in Figur 1 dargestellte Rohrverbinder 100 mit seinen jeweils drei Dichtlippen 102 die Anforderungen bezüglich Leckagedichtheit und erfüllt mindestens die zweithöchste Dichtklasse, Klasse C.

Der Rohrverbinder kann eine Shore A-Härte zwischen 30 - 50 aufweisen. Dadurch kann das Einschieben eines Rohrs in den Rohrverbinder erleichtert sein, bzw. der Rohrverbinder ein verbessertes Einschubverhalten aufweisen.

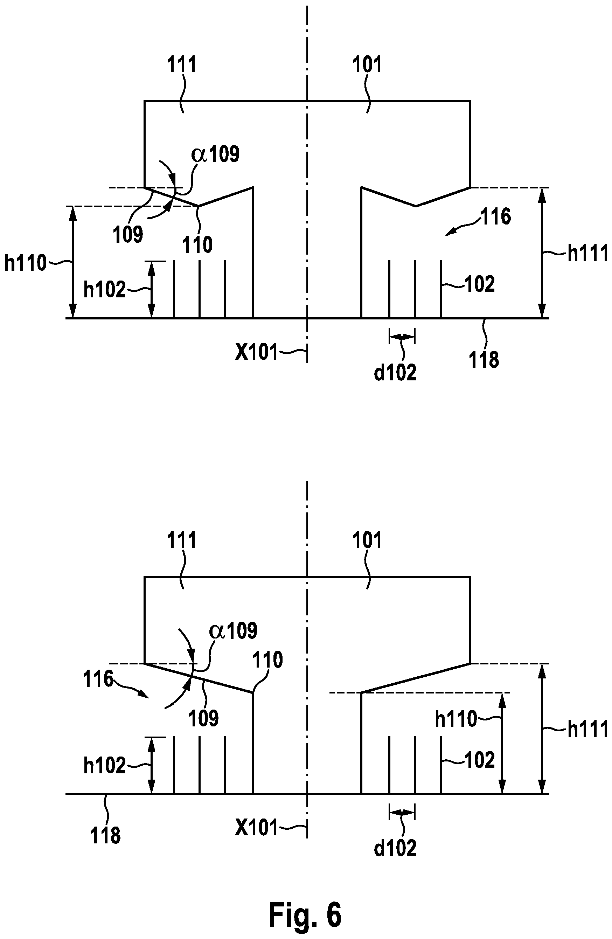

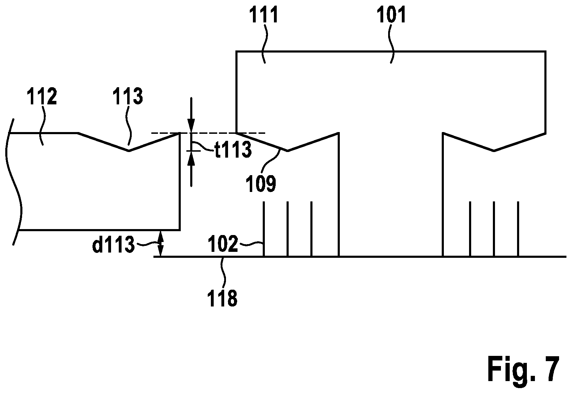

Der Rohrverbinder 100 kann mindestens ein Halteelement 101 aufweisen. Das Halteelement 101 kann an oder bei dem Anschlag 103 angeordnet sein. Es kann vorgesehen sein, dass das Halteelement 101 mit dem Anschlag 103 einstückig ausgebildet ist. Das Halteelement 101 kann L-förmig, T-förmig, C-förmig oder dergleichen sein bzw. eine entsprechende Form aufweisen. Mit dem Halteelement 101 kann ein in den Rohrverbinder 100 eingeführtes Rohr 112 an die Innenwand des Rohrverbinders 100 gepresst und/oder gedrückt werden. Es kann auch vorgesehen sein, dass ein in den Rohrverbinder 100 eingeführtes Rohrende eines Rohres 112 mit dem Halteelement 101 und der Innenwand des Rohrverbinders 100 verklemmt ist oder wird. Das Halteelement 101 kann dabei an der Innenseite 118 des Rohrverbinders 100 derart angeordnet sein, dass ein eingeführtes Rohr 112 bzw. dessen Rohrende gegen die Dichtlippen 102 gepresst ist oder wird. Der Rohrverbinder 100 kann eine Mehrzahl Halteelement 101 aufweisen. Die jeweiligen Halteelement 101 können dabei regelmäßig voneinander beanstandet sein. Beispielhafte Ausführungsformen des Halteelements 101 werden nachfolgend weiter in den Figuren 6 und 7 weiter beschrieben. Es kann vorgesehen sein, dass der Rohrverbinder mehrere Halteelemente 101 aufweist. In diesem Falle können die Halteelemente 101 regelmäßig voneinander beabstandet sein, beispielsweise entlang des Anschlags 103. Es kann aber auch vorgesehen sein, dass mindestens ein Halteelement 101 vollständig oder zumindest abschnittsweise an, bei oder mit dem Anschlag umlaufend ausgebildet ist. Es kann vorgesehen sein, genau ein Halteelement an mindestens einer oder mehreren Innenseiten des Rohrverbinders anzuordnen. Das Verhältnis aus Breite des Halteelements 101 zu Innenumfang des Rohrverbinders 100, zu der Innenseite 118 des Rohrverbinders, an der das Halteelement 101 angeordnet sein kann, oder zu dem Innenumfang des Anschlags 103 kann zwischen 1/50 bis 1/10 betragen. Das Halteelement 101 kann damit verglichen mit z.B. der Breite der Aufnahme 114, 115 des Rohrverbinders 100 schmal sein.

Der Rohrverbinder 100 und/oder die erste Aufnahme 114 und/oder die zweite Aufnahme 115 können eine Einführschräge 105 aufweisen. Die Einführschräge 105 kann eine Fase sein oder aufweisen. Die Einführschräge 105 kann an einer Innenseite der Einführungsöffnung der jeweiligen Aufnahme 114, 115 angeordnet sein. Mit der Einführschräge 105 kann das Einführen eines Rohr 112 bzw. dessen Rohrende in den Rohrverbinder 100 erleichtert werden. Die Einführschräge 105 kann umlaufend angeordnet sein. Es kann vorgesehen sein, dass die Außenabmessungen des Rohrs 112 und der ersten Aufnahme 114 und/oder der zweiten Aufnahme 115 derart bemessen sind, dass sich bei Einführung des Rohrs 112 in den Rohrverbinder 100 eine Presspassung oder Klemmpassung ergibt. In diesem Falle kann die Einführschräge 105 die Montage bzw. das Einführen des Rohrstücks 112 in den Rohrverbinder 100 erleichtern.

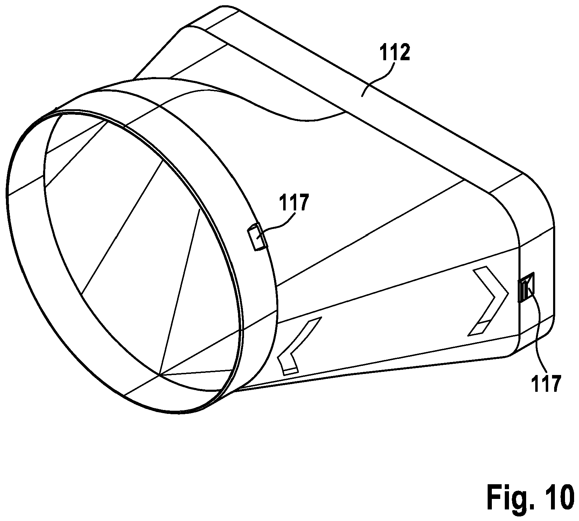

Alternativ oder zusätzlich kann das Rohr 112 über eine Rastverbindung mit dem Rohrverbinder 100 verbunden sein oder werden. Der Rohrverbinder 100 kann dazu ein geeignetes Rastelement 107 oder ein entsprechendes Verbindungselement aufweisen, die oder das mit einer komplementären Rastnase 117 des Rohrs 112 verbunden oder verrastet werden kann. Damit kann das Rohr 112 leicht und wieder lösbar an dem Rohrverbinder 100 befestigt werden. Der Rohrverbinder 100 kann auch mehrere entsprechende Rastelemente 107 bzw. Verbindungselemente aufweisen, die jeweils zueinander regelmäßig beabstandet sein können. Das Rastelement 107 und/oder das Verbindungselement kann an einer Innenseite 118 des Rohrverbinders 100 angeordnet sein. Das Rastelement 107 und/oder das Verbindungselement kann an oder bei der ersten Aufnahme 114 und/oder der zweiten Aufnahme 115 bzw. deren Eintrittsöffnungen angeordnet sein. Ein beispielhaftes Rohr 112 und/oder Rohrende mit einer entsprechenden Rastnase 117 ist in Figur 10 dargestellt. Alternativ oder zusätzlich kann der Rohrverbinder 100 mindestens einen nicht in Figur 1 oder 2 gezeigtes Rohrverbinder-Clipselement aufweisen. Das Rohrverbinder-Clipselement kann in der ersten Aufnahme 114 und/oder der zweiten Aufnahme 115 angeordnet sein. Bevorzugt kann das Rohrverbinder-Clipselement an einer Innenseite der ersten Aufnahme 114 und/oder der zweiten Aufnahme 115 angeordnet sein. Weist der Rohrverbinder 100 mehrere Rohrverbinder-Clipselemente auf, so können diese umlaufend, bevorzugt äquidistant, in der ersten Aufnahme 114 und/oder der zweiten Aufnahme 115 angeordnet sein. Das Rohrverbinder-Clipselement kann der in Figur 10 gezeigten Rastnase 117 entsprechen bzw. wie diese geformt und/oder ausgebildet sein.

Der Rohrverbinder 100 kann wie in Figur 1 und 2 gezeigt mindestens eine Symmetrieachse aufweisen. Der Rohrverbinder 100 und/oder das Halteelement 101 kann spiegelsymmetrisch, achsensymmetrisch und/oder rotationssymmetrisch sein oder eine entsprechende Form aufweisen. Insbesondere kann vorgesehen sein, dass der Rohrverbinder 100 keine bevorzugte Anschlussrichtung, Ausrichtung, Orientierung oder Durchströmungsrichtung aufweist. Damit kann die Montage bzw. das Verbinden eines Rohrs 112 mit dem Rohrverbinder 100 erleichtert werden.

Der Rohrverbinder 100 kann an einer Außenseite eine Nut 108 aufweisen. Die Nut 108 kann umlaufend angeordnet sein. Die Nut 108 kann beispielsweise als Handhabeelement oder Griffelement für eine erleichterte Montage dienen. Der Rohrverbinder kann alternativ oder zusätzlich auch ein haptisches Element 104 aufweisen, das als Handhabeelement oder Griffelement dienen kann. Es kann vorgesehen sein, dass das haptische Element 104 eine optische und/oder fühlbare bzw. tastbare Typenbezeichnung oder Code des Rohrverbinders 100 aufweist, die beispielsweise Informationen bezüglich Abmessungen, Material, oder sonstigen Eigenschaften des Rohrverbinders 100 umfassen kann. Damit kann bei der Montage besonders leicht der gerade passende Rohrverbinder ausgewählt werden. Das haptische Element kann eine bevorzugte Durchströmungsrichtung des Rohrverbinders anzeigen.

Der Rohrverbinder 100 kann ein Verhältnis einer Breite b₁₀₀ und/oder Höhe h₁₀₀ zu einer Tiefe t₁₀₀ aufweisen, so dass b₁₀₀/t₁₀₀ ≥ 2.5 und/oder h₁₀₀/t₁₀₀ ≥ 1.2, bevorzugt b₁₀₀/t₁₀₀ ≥ 2.5 und/oder h₁₀₀/t₁₀₀ ≥ 3, sein kann. Damit kann sich ein Rohrverbinder 100 ergeben, der wenig Platz benötigt. Durch eine Mehrzahl Dichtlippen 102 kann dabei dennoch eine gute Abdichtung bzw. Leckagedichtheit erzielt werden.

Der Rohrverbinder 100 kann wie in Figur 1 und 2 dargestellt dazu eingerichtet sein, im wesentlichen rechteckige Rohre 112 fluidisch dichtend miteinander zu verbinden. Insbesondere kann der Rohrverbinder 100 dazu eingerichtet sein, Flachkanäle fluidisch dichtend miteinander zu verbinden. Dazu kann insbesondere die Breite b₁₀₀ und die Höhe h₁₀₀ des Rohrverbinders bzw. die jeweiligen Aufnahmen 114, 115 geeignet gewählt sein.

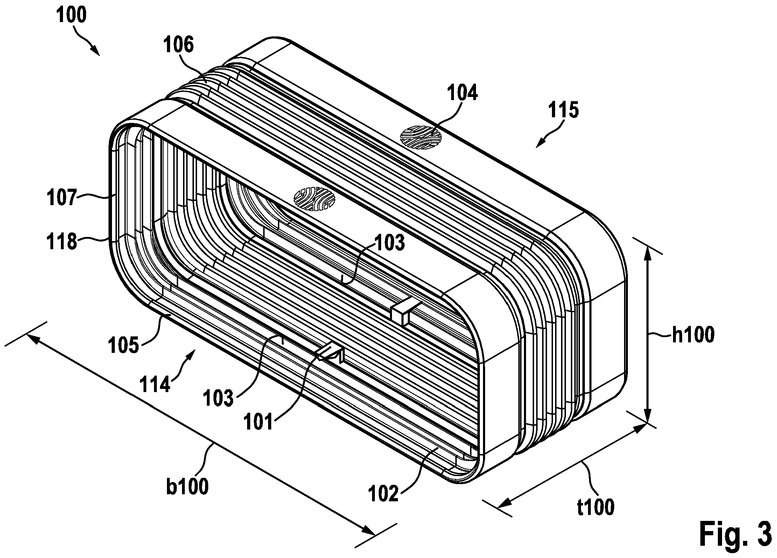

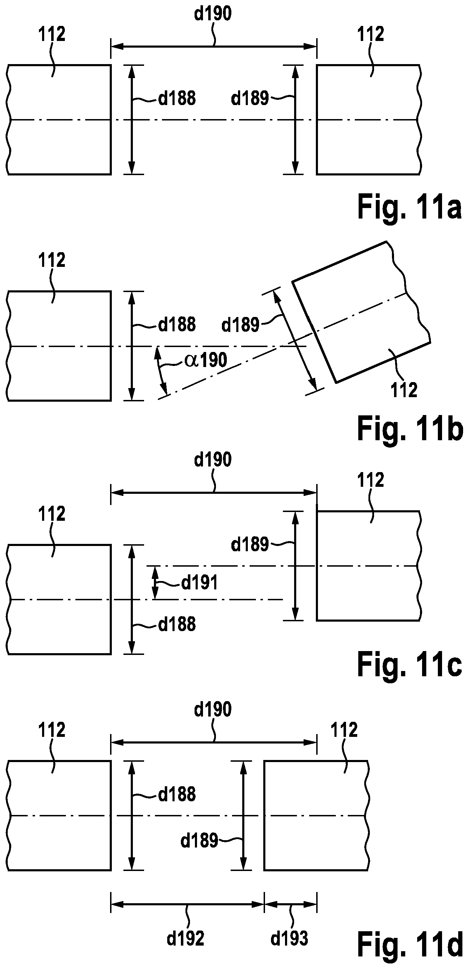

Ein zur Erfindung gehörender Rohrverbinder 100 weist wie in Figur 3 gezeigt einen flexiblen Bereich 106 auf. Der in Figur 3 gezeigte Rohrverbinder kann mindestens eines, mehrere oder alle der mit Bezug zu Figur 1 und/oder 2 beschriebenen Merkmale aufweisen. Der flexible Bereich 106 kann zwischen der ersten Aufnahme 114 und der zweiten Aufnahme 115 angeordnet sein. Der flexible Bereich 106 kann eine relative Verlagerung, beispielsweise eine translatorische oder rotatorische Verlagerung, der ersten Aufnahme 114 zu der zweiten Aufnahme 115 oder umgekehrt ermöglichen. Der flexible Bereich 106 kann dazu aus einem geeigneten Material, beispielsweise einem weichen und/oder verformbaren Kunststoff, bestehen oder ein solches aufweisen. Der flexible Bereich kann stauch- und/oder dehnbar sein. Der flexible Bereich 106 weist einen Balg, z.B. einen Faltenbalg, auf, oder ist ein Balg, z.B. ein Faltenbalg. Damit lassen sich mit einem solchen Rohrverbinder 100 auch nicht exakt miteinander ausgerichtete Rohre 112, beispielsweise unter einem Winkel und/oder versetzte Rohre 112, miteinander bequem verbinden. Beispielsweise kann der Rohrverbinder 100 durch den flexiblen Bereich 106 zwei Rohre 112 miteinander verbinden, die unter einem Winkel von bis zu 15° zueinander ausgerichtet sind. Alternativ oder zusätzlich kann mit dem Rohrverbinder 100 auch ein Versatz zweier Rohre 112 z.B. von ein bis 2 cm in beliebiger Richtung, z.B. in vertikaler Richtung, überbrückt werden. Alternativ oder zusätzlich kann bei der Montage durch den flexiblen Bereich 106, z.B. durch Dehnung oder Stauchung, Längendifferenzen von z.B. 1 bis 3 cm ausgeglichen werden, wenn beispielsweise eines oder beide der zu verbindenden Rohre 112 zu kurz und/oder zu lang zugeschnitten worden sind. Beispielhaft unter einem entsprechenden Versatz angeordnete Rohre 112 sind in Fig. 11 dargestellt. Durch den flexiblen Bereich 106 können damit insbesondere Spannungen im Rohrverbinder 100, den Rohren 112 und den entsprechenden Verbindungsstellen und Verbindungselementen reduziert und/oder vermieden werden.

Bei dem in Figur 3 gezeigten Ausführungsbeispiel eines Rohrverbinder 100 ist der flexible Bereich 106 symmetrisch in der Mitte zwischen der ersten Aufnahme 114 und der zweiten Aufnahme 115 angeordnet. Das in Figur 3 dargestellte Ausführungsbeispiel weist zudem zwei Anschläge 103 sowie zwei Halteelemente 101 auf. Die jeweiligen Anschläge 103 und Halteelemente 101 sind dabei an der Innenseite 118 des Rohrverbinders 100 angrenzend an den flexiblen Bereich 106 angeordnet. Die Halteelemente 101 können wie in Figur 3 gezeigt L-förmig sein. Selbstverständlich ist eine solche in Figur 3 dargestellte symmetrische Anordnung allerdings nicht zwingend erforderlich.

Das in Figur 3 dargestellte Ausführungsbeispiel eines Rohrverbinders 100 weist zudem wie mit Bezug zu den Figuren 1 und 2 beschrieben Dichtlippen 102, Einführschräge 105 und Rastelement 107 auf. Die Abmessungen, insbesondere Höhe h₁₀₀, Breite b₁₀₀ und/oder Tiefe t₁₀₀, können dabei im Wesentlichen denjenigen des in den Figuren 1 und 2 gezeigten Ausführungsbeispiels entsprechen.

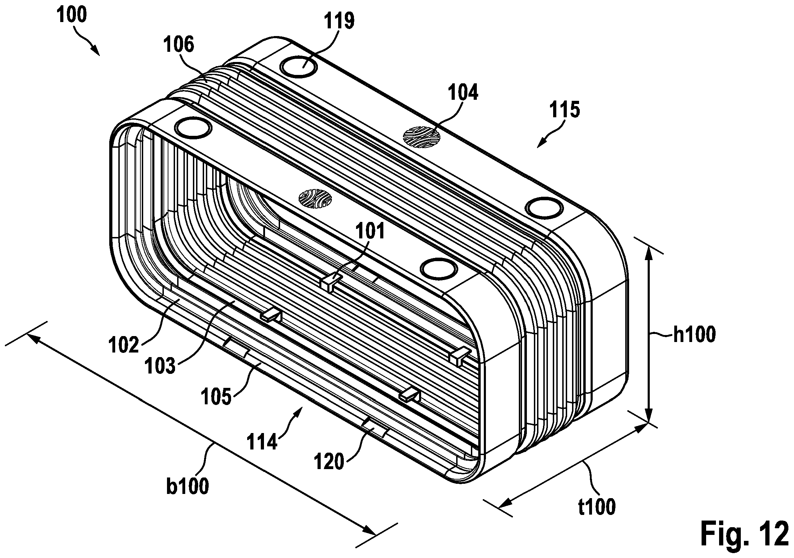

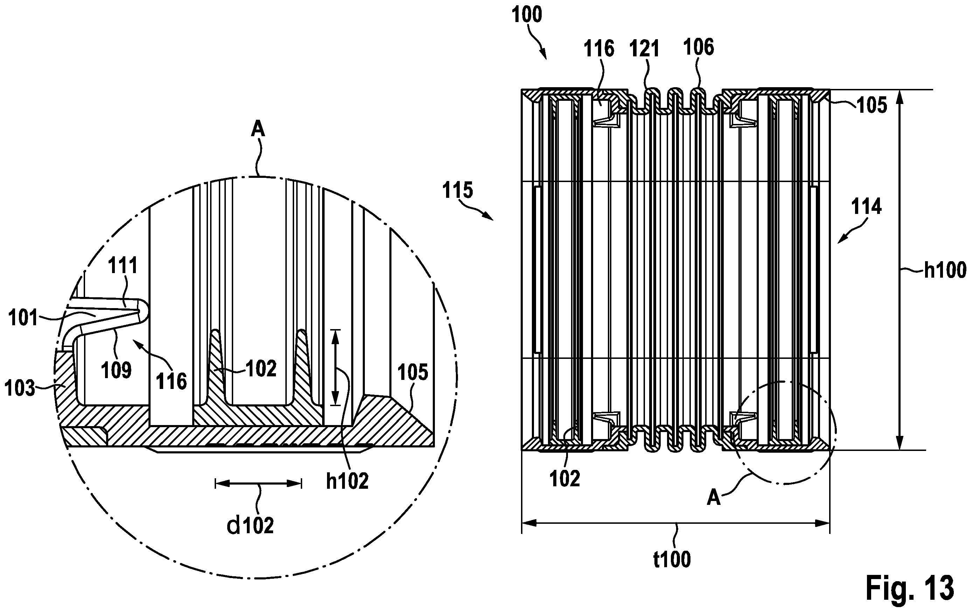

Figuren 12 und 13 zeigen eine weitere Ausführungsform eines erfindungsgemäßen Rohrverbinders 100. Der in den Figuren 12 und 13 gezeigte Rohrverbinder kann mindestens eines, mehrere oder alle der mit Bezug zu Figur 1, 2 und/oder 3 beschriebenen Merkmale aufweisen. Der Rohrverbinder 100 kann je Anschlag 103 zwei oder mehr Halteelemente 101 aufweisen. Es kann vorgesehen sein, dass der Rohrverbinder je Anschlag 103 exakt zwei Halteelemente 101 aufweist. Damit kann ein guter Kompromiss aus nicht zu komplizierter Fertigung und guter Verbindung und Dichtigkeit zwischen Rohrverbinder 100 und einem darin aufgenommenen Rohr erzielt werden. Beispielweise kann eine konkave Durchbiegung des Rohrverbinders 100 und/oder eines aufgenommenen Rohrs reduziert werden. Es kann vorgesehen sein, dass die zwei oder mehr Halteelemente 101 symmetrisch und/oder gleichmäßig entlang des jeweiligen Anschlags 103 verteilt und/oder angeordnet sein können. Bei der in Figur 12 gezeigten Ausführungsform sind die je zwei Halteelemente 101 je Anschlag 103 symmetrisch bezüglich des Rohrverbinders 101 angeordnet, insbesondere in Richtung der Breite b₁₀₀.

Wie beispielsweise in Figur 12 gezeigt kann der Rohrverbinder 100 und/oder die Einführungsschräge 105 mindestens eine Aussparung 120 aufweisen. Die Aussparung kann derart angeordnet sein, dass sie mit dem Halteelement 101 fluchtet. Die Aussparung 120 kann der erleichterten Einführung des Rohrs dienen, z.B. von Clips- oder Befestigungselementen des Rohrs. Es kann aber auch vorgesehen sein, dass die Aussparung 120 selbst als Befestigungsmittel dient oder dazu eingerichtet ist.

Der Rohrverbinder 100 kann mindestens einen Abstandshalter 119 aufweisen. Der Abstandshalter 119 kann an einer Außenseite des Rohrverbinders 100 angeordnet sein. Der Abstandshalter 119 kann ein Gummielement und/oder eine Gummierung sein oder aufweisen. Der Abstandshalter kann beispielsweise die Oberfläche eines verbauten Rohrverbinders von der Oberfläche einer Wand, eines Küchenelements, eines Rohrs, eines anderen Rohrverbinders, oder dergleichen beabstanden.

Figur 13 zeigt eine Querschnittsansicht eines erfindungsgemäßen Rohrverbinders, der beispielsweise einem der in Figur 3 oder Figur 12 gezeigten Ausführungsform entsprechen kann. Der flexible Bereich 106 ist ein Balg, z.B. ein Faltenbalg, oder weist einen solchen auf. Der flexible Bereich 106 kann Falten 121 aufweisen. Die Falten 121 können Konturen sein oder solchen entsprechen. Es kann vorgesehen sein, dass der Rohrverbinder wie in Figur 13 gezeigt genau drei Falten 121 aufweisen kann. Die Falten können wie in Figur 13 gezeigt nach außen weisen. Die Falten können sinusförmig sein. Es kann aber vorgesehen sein, dass die Falten wie in Figur 13 gezeigt eckig sind und/oder eine eckige Form aufweisen können. Sind die Falten eckig, so kann verglichen mit sinusförmigen Falten die Durchströmung durch den flexiblen Bereich verbessert sein. Insbesondere kann ein Druckabfall der Strömung reduziert sein bzw. werden. Der Abstand zweier Falten zueinander kann kleiner als die Höhe der Falten sein, vgl. z.B. Fig. 13. Es können sich damit kleine Krümmungsradien der Faltungen ergeben. Damit kann die Durchströmung weiter verbessert sein bzw. werden, insbesondere der Druckabfall weiter reduziert sein bzw. werden. Mindestens eine Ausführungsform des Rohrverbinders 100 weist wie in Figur 13 gezeigt exakt drei nach außen weisende Falten 121 auf. Es kann aber auch vorgesehen sein, dass der Rohrverbinder 100 mehr oder weniger als drei Falten 121 aufweist. Eine Anzahl von drei Falten 121 kann einen guter Kompromiss zwischen Flexibilität und Stabilität bereitstellen. Verglichen mit z.B. einem Rohrverbinder mit fünf Falten kann ein Rohrverbinder mit drei Falten geringere Druckverluste aufgrund eines verringerten "Ausweichens" des flexiblen Bereichs 106 aufweisen. Zudem kann sich eine bessere Krafteinleitung von dem Rohreinführbereich bzw. der Muffe auf den flexiblen Bereich 106 ergeben.

Es kann vorgesehen sein, dass der flexible Bereich 106 mit den Rohreinführbereichen bzw. Muffen verbunden ist, z.B. verschweißt oder verklebt. Es kann aber auch vorgesehen sein, dass der flexible Bereich mit mindestens einem oder allen Rohreinführbereichen bzw. Muffen einstückig ausgeführt ist.

Der Ausschnitt A der Figur 13 zeigt eine Vergrößerung des Dichtbereichs. Der Dichtbereich kann mindestens zwei, in einigen Ausführungsformen exakt zwei, Dichtlippen 102 aufweisen. Eine, mehrere oder alle Dichtlippen 102 können an, bei und/oder fluidisch vor einer Rohrendenaufnahme 116 angeordnet sein. In einigen Ausführungsformen kann vorgesehen sein, dass mindestens eine der Dichtlippen 102 in der Rohrendenaufnahme 116 angeordnet ist. Dichtlippen 102, Halteelement 101 und Rohrendenaufnahme 116 werden weiter unten mit Bezug zu Figuren 6 bis 8 weiter beschrieben.

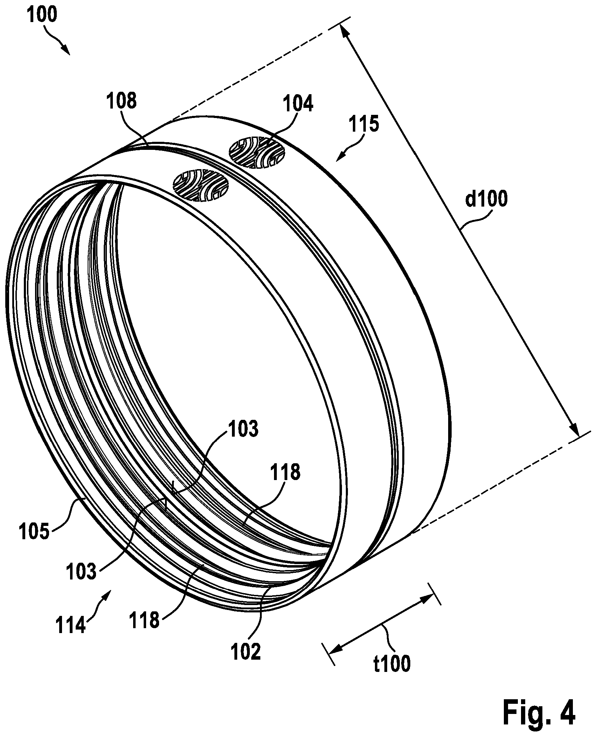

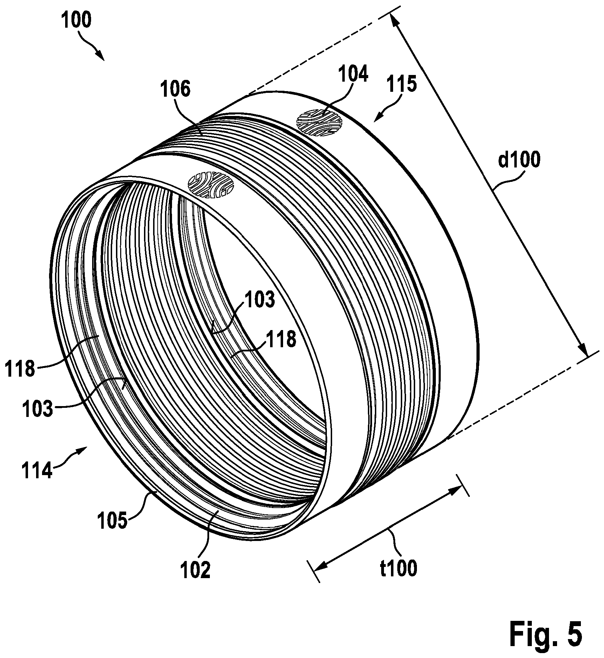

Die in den Figuren 4 und 5 dargestellten weiteren Ausführungsbeispiele eines Rohrverbinders 100 unterscheiden sich von den in den Figuren 1 bis 3 dargestellten Ausführungsformen unter anderem dadurch, dass mit diesen Rundrohre verbunden werden können, wobei in Figur 4 ein nicht zur Erfindung gehörender Rohrverbinder 100 und in Figur 5 ein zur Erfindung gehörender Rohrverbinder 100 gezeigt ist. Der Rohrverbinder 100 der Figur 5 weist einen flexiblen Bereich 106 auf. Der in Figur 5 gezeigte Rohrverbinder 100 kann mindestens eines, mehrere oder alle der bzgl. der Figuren 1 bis 3 beschrieben Merkmale aufweisen, bzw. kann sich lediglich in seiner Form (rund gegenüber quadratisch / flach) von diesen unterscheiden. Dabei kann das Verhältnis des Durchmessers d₁₀₀ zu der Tiefe t₁₀₀, d₁₀₀/t₁₀₀ ≥ 1.5, bevorzugt d₁₀₀/t₁₀₀ ≥ 2 sein. Ein beispielhafter Rundverbinder kann einen Durchmesser d₁₀₀ = 150 mm und eine Tiefe t₁₀₀ = 60 mm haben. Es kann vorgesehen sein, dass der in Figur 4 dargestellte Rohrverbinder 100 für ein Rundrohr und/oder der in Figur 5 dargestellte Rohrverbinder 100 mit flexiblem Bereich 106 wie in den Figuren 1 bis 3 dargestellt und beschrieben eines oder mehrere (nicht in den Figuren 4 und 5 dargestellte) Halteelemente 101 aufweist. Ebenso kann vorgesehen sein, dass die den in den Figuren 1 bis 3 beschriebenen und dargestellten entsprechenden Ausführungsbeispiele keine Halteelemente 101 aufweisen. Ebenso sind Ausführungsformen denkbar, die eine erste Aufnahme 114 für einen Flachkanal und eine zweite Aufnahme 115 für einen Rundkanal bzw. ein Rundrohr oder umgekehrt aufweisen.

Figuren 6 und 7 zeigen Ausführungsbeispiele erfindungsgemäßer Halteelemente 101. Die jeweiligen Halteelemente 101 sind dabei nicht auf eine in den Figuren dargestellte T-Form beschränkt, sondern können auch L-förmig, C-förmig oder dergleichen sein bzw. eine entsprechende Form aufweisen.

Das Halteelement 101 kann wie in den Figuren 6 und 7 gezeigt mindestens einen Steg 111 aufweisen. Der Steg 111 kann über eine Innenseite 118 des Rohrverbinders 100 ragen und mit der Innenseite 118 eine Rohrendenaufnahme 116 bilden. Die Höhe h₁₁₁ des Stegs 111 über der Innenseite 118 kann einer Dicke, z.B. der Wanddicke, des Rohrs 112 entsprechen. Wird ein Rohr 112 durch eine Einführöffnung der Aufnahme 114, 115 in den Rohrverbinder 100 eingeführt, so kann das Rohrende in der Rohrendenaufnahme 116 aufgenommen sein oder werden. Das Halteelement 101 kann eine Anpressführung 109 aufweisen, so dass beim Einführen des Rohrendes in die Rohrendenaufnahme 116 das Rohrende zu der Innenseite 118 des Rohrverbinders 100 geführt wird. Die Anpressführung 109 und/oder das Halteelement 101 kann einen definierten Anpresspunkt 110 aufweisen. Je nach Dimension der Rohrendenaufnahme 116, beispielsweise der Höhe h₁₁₁ des Stegs oder der Höhe h₁₁₀ des Anpresspunkts 110 über der Innenseite 118 kann das Rohrende an die Innenseite 118 angepresst und/oder in der Rohrendenaufnahme 116 kraftschlüssig aufgenommen sein. Beispielsweise kann die Höhe h₁₁₁ und/oder die Höhe h₁₁₀ kleiner als die Wanddicke des Rohrs 112 sein. Bevorzugt kann die Höhe h₁₁₀ des Anpresspunkts 110 kleiner als die Höhe des Stegs 111 sein, vergleiche z.B. die Figuren 6 und 7. Die Anpressführung 109 kann wie in den Figuren 6 und 7 beispielhaft dargestellt schräg unter einem Winkel α₁₀₉ verlaufen. Der Winkel α₁₀₉ kann zwischen 1° und 20°, bevorzugt zwischen 1° und 15° betragen. Der Winkel α₁₀₉ kann auch derart gewählt sein, dass sich eine Selbsthemmung eines in die Rohrendenaufnahme 116 eingeführten bzw. aufgenommenen Rohrende ergibt. Das Halteelement 101 kann mit dem Anschlag 103 einstückig ausgeführt sein. Das Halteelement 101 kann symmetrisch um mindestens eine Symmetrieachse, z.B. X₁₀₁, ausgebildet sein. Der Rohrverbinder 100 kann symmetrisch um mindestens eine Symmetrieachse, z.B. X₁₀₁, ausgebildet sein. Mindestens eine Symmetrieachse des Halteelements 101 kann mit mindestens einer Symmetrieachse des Rohrverbinders 100 zusammenfallen oder identisch sein.

Es kann vorgesehen sein, dass eine, mehrere oder alle Dichtlippen 102 an der Innenseite 118 des Rohrverbinders 100 unter dem Steg 111 und/oder in der Rohrendenaufnahme 116 angeordnet sind. Damit kann das Rohrende durch das Halteelement 101 zu den Dichtlippen 102 geführt und/oder an diese angepresst werden, so dass sich eine besonders gute Abdichtung ergeben kann.

Wie schematisch um beispielhaft in Figur 7 gezeigt kann das Rohr 112 und/oder dessen Rohrende alternativ oder zusätzlich mit dem Halteelement 101 verclipt sein oder werden bzw. mit einer Clip-Verbindung und/oder Schnapp-Verbindung verbunden sein oder werden. Das Halteelement 101 und das Rohr 112 bzw. das Rohrende können dazu geeignete komplementäre Verbindungselemente 113 aufweisen. Das komplementäre Verbindungselement kann beispielsweise eine Verbindungsnut 113 des Rohrs 112 bzw. das Rohrendes sein oder aufweisen, in die ein Clips-Element 110 des Rohrs 112 eingreifen kann. Das Clips-Element 110 kann z.B. der Anpresspunkt 110 sein oder aufweisen. Die Tiefe t₁₁₃ der Nut 113 kann dazu geeignet auf die Geometrie der Anpressführung 109, des Anpresspunkts 110 und oder eines geeigneten Verbindungselement des Halteelements 101 angepasst sein. Es kann vorgesehen sein, dass das Rohrs 112 bzw. das Rohrende einen Abstand d₁₁₃ zu der Innenseite 118 bei verclipter Verbindung mit dem Haltelement 101 aufweist, so dass das Rohr 112 bzw. das Rohrende in der Rohrendenaufnahme 116 nicht kraftschlüssig, sondern nur über die Clip-Verbindung gehalten ist. Damit kann das Rohr 112 wieder leicht von dem Halteelement 101 getrennt werden. Dabei kann der Abstand d₁₁₃ klein genug sein, dass sich dennoch eine gute Leckagedichtung bzw. fluidische Abdichtung mit den Dichtlippen 102 ergibt. Alternativ können die jeweiligen Abmessungen, z.B. h₁₁₀, h₁₁₁, α₁₀₉, t₁₁₃, d₁₁₃ und/oder der Rohrendenaufnahme 116 oder dergleichen, derart dimensioniert sein, dass sich zusätzlich zur Clip-Verbindung ein Kraftschluss, ein Formschluss und/oder eine Selbsthemmung des Rohrs 112 bzw. des Rohrendes in der Rohrendenaufnahme 116 ergibt.

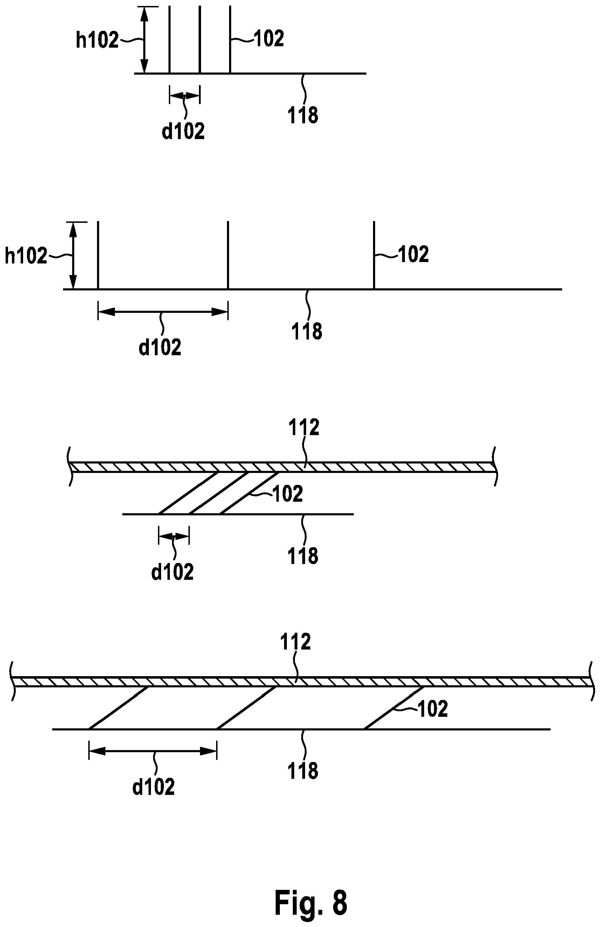

Wie beispielhaft und schematisch in Figur 8 gezeigt können die Dichtlippen 102 derart dimensioniert sein, insbesondere eine Höhe bzw. Länge h₁₀₂ aufweisen, und voneinander unter einem Abstand d₁₀₂ beabstandet sein, dass sie sich bei in den Rohrverbinder 100 eingeführtem Rohr 112 gegenseitig zumindest teilweise und/oder paarweise überlappen. Insbesondere kann das Verhältnis d₁₀₂/h₁₀₂ < 1 sein. Es kann aber auch vorgesehen sein, dass der jeweilige Abstand d₁₀₂ je nach Dichtlippenpaar variiert oder derart gewählt ist, dass mindestens eine, einige oder alle Dichtlippen 102 bei eingeführtem Rohr 112 nicht überlappen. Es kann vorgesehen sein, dass mindestens zwei, mehrere oder alle Dichtlippen 102 eine gleiche oder unterschiedliche Höhe h₁₀₂, h₁₀₃, h₁₀₄, aufweisen. Alternativ oder zusätzlich kann vorgesehen sein, dass mindestens einer, mehrere oder alle Abstände d₁₀₂, d₁₀₃ zwischen den entsprechenden Dichtlippen gleich oder unterschiedlich sind. Es kann vorgesehen sein, dass mindestens zwei, mehrere oder alle Dichtlippen 102 eine unterschiedliche oder gleiche Dicke aufweisen und/oder ein gleiches oder unterschiedliches Material aufweisen. Die Höhe, Dicke und der Abstand kann geeignet gewählt sein, so dass die Dichtlippen 102 gut abdichten.

Auch wenn in Figuren 6, 7 und 8 drei Dichtlippen 102 gezeigt sind, kann der Rohrverbinder 100 auch eine davon abweichende Anzahl Dichtlippen, z.B. eine oder mehr als eine Dichtlippe 102 oder exakt zwei Dichtlippen 102 aufweisen. Die beschriebenen und in den Figuren gezeigten Ausführungsbeispiele lassen sich offensichtlich geeignet anpassen.

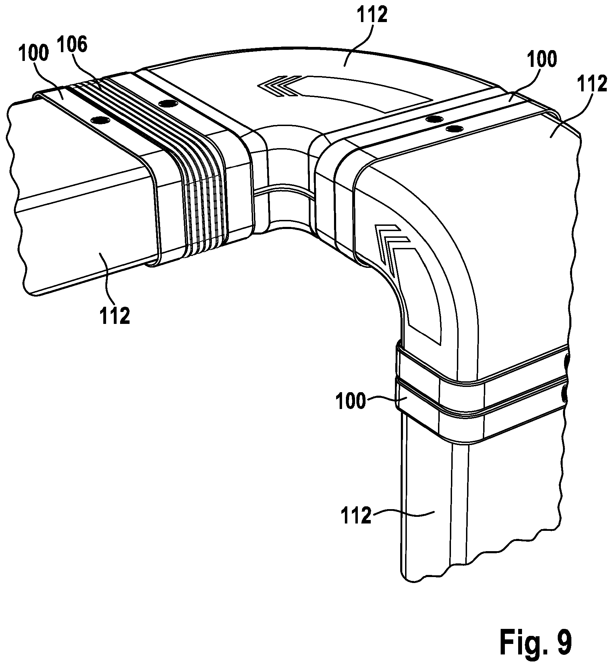

Figur 9 zeigt eine beispielhafte Anordnung eines erfindungsgemäßen Rohrverbinders 100 mit zwei damit verbundenen Rohren 112. Bei der beispielhaften Anordnung verbindet ein erster Rohrverbinder 100 ein im Wesentlichen in horizontaler Richtung angeordnetes Rohr 112 mit einem Horizontal-Umlenkstück 112. An das Horizontal-Umlenkstück 112 ist durch einen weiteren Rohrverbinder 100 ein Vertikal-Umlenkstück 112 angeschlossen. Durch einen dritten Rohrverbinder 100 ist mit dem Vertikal-Umlenkstück 112 ein im Wesentlichen in senkrechter Richtung verlaufendes Rohr 112 verbunden. Die jeweiligen Rohre 112 sind damit durch die Rohrverbinder 100 fluidisch dichtend miteinander verbunden. Wie beispielhaft in Figur 9 gezeigt weist mindestens einer oder alle Rohrverbinder 100 einen flexiblen Bereich 106 auf. Beispielsweise kann das Rohr 112 in horizontaler Richtung zu dem Horizontal-Umlenkstück 112 einen Versatz oder eine Verdrehung aufweisen, der oder die durch den flexiblen Bereich 106 ausgeglichen werden kann.

Figur 11 zeigt beispielhaft und schematisch jeweils zwei relativ zueinander angeordnete Rohre 112, die mit einem erfindungsgemäßen Rohrverbinder 100 verbunden sind. Der Rohrverbinder 100 ist dabei in Figur 11 nicht dargestellt. In Figur 11 a) sind die beiden Rohre 112 unter einem Abstand d₁₉₀ ihrer einander zugewandten Rohrenden angeordnet. Die beiden Rohre 112 sind dabei derart zueinander ausgerichtet, dass ihre (in der Figur mit den gestrichelten horizontalen Linien angedeuteten) Längsachsen zusammenfallen, vergleiche Figur 11 a). Die Abmessung d₁₈₈ kann dabei eine charakteristischen Abmessung eines ersten Rohrs 112, beispielsweise einer Breite, einer Höhe oder einem Durchmesser, entsprechen. Die Abmessung d₁₈₉ kann dabei eine charakteristischen Abmessung eines zweiten Rohrs 112, beispielsweise einer Breite, einer Höhe oder einem Durchmesser, entsprechen. Die Abmessungen d₁₈₈ und d₁₈₉ können derart bemessen sein, dass die Rohre 112 in einer Aufnahme 114, 115 eines Rohrverbinder 100 aufgenommen werden können. Die beiden Rohre 112 sind mit einem nicht in der Figur dargestellten Rohrverbinder 100 und über diesen auch miteinander fluidisch verbunden. Der Rohrverbinder 100 kann beispielsweise einem in den Figuren 1 bis 5 dargestellten Ausführungsbeispiel entsprechen. Der Abstand d₁₉₀ der beiden Rohrenden kann einer oder der Tiefe t₁₀₀ des Rohrverbinders 100 entsprechen. Die in Figur 11 b) dargestellte Anordnung unterscheidet sich von derjenigen der Figur 11 a) insbesondere dadurch, dass eines der beiden Rohre 112 relativ zu dem anderen Rohr 112 um einen Winkel α₁₉₀ verschwenkt bzw. gedreht ist. Der die beiden Rohre 112 verbindende Rohrverbinder 100 weist dabei wie oben beschrieben einen flexiblen Bereich 106 au, der den entsprechenden Winkelversatz der beiden Rohre 112 ausgleichen kann. Die in Figur 11 c) dargestellte Anordnung unterscheidet sich von denjenigen der Figur 11 a) insbesondere dadurch, dass eines der beiden Rohre relativ zu dem anderen Rohr 112 um einen Abstand d₁₉₁ versetzt ist. Der Versatz kann wie dargestellt senkrecht zu einer oder beider Längsachsen der Rohre 112 ausgerichtet sein. Der die beiden Rohre 112 verbindende Rohrverbinder 100 weist dabei wie oben beschrieben einen flexiblen Bereich 106 auf, der den entsprechenden Versatz der beiden Rohre 112 ausgleichen kann. Die in Figur 11 d) dargestellte Anordnung unterscheidet sich von derjenigen der Figur 11 a) insbesondere dadurch, dass eines der beiden Rohre 112 bzw. Rohrenden relativ zu dem anderen Rohr 112 bzw. Rohrende entlang einer oder beider Längsachsen der Rohre 112 versetzt ist. Der Versatz d₁₉₃ der beiden Rohre relativ zueinander kann dabei wie in Figur 11 d) gezeigt derart ausgebildet sein, dass der Abstand der beiden Rohre d₁₉₂ zueinander kleiner als der Abstand d₁₉₀ und damit ggf. auch kleiner als eine Tiefe t₁₀₀ des Rohrverbinders 100 sein kann. Der Versatz d₁₉₃ der beiden Rohre relativ zueinander kann aber auch derart ausgebildet sein, dass der Abstand der beiden Rohre d₁₉₂ zueinander größer als der Abstand d₁₉₀ und damit ggf. auch größer als eine Tiefe t₁₀₀ des Rohrverbinders 100 sein kann (nicht in Fig. 11 gezeigt). Der die beiden Rohre 112 verbindende Rohrverbinder 100 weist dabei wie oben beschrieben einen flexiblen Bereich 106 auf, der durch eine Stauchung oder Streckung den entsprechenden Versatz der beiden Rohre 112 ausgleichen kann. Selbstverständlich sind die mit einem Rohrverbinder 100 verbindbare Anordnungen zweier oder mehrerer Rohre 112 nicht auf die in Figur 11 gezeigten Beispiele beschränkt. Es sind zudem beliebige Kombinationen aus Translation und Rotation, z.B. beliebige Kombinationen der in Fig. 11 dargestellten Beispiele, möglich.

### Bezugszeichenliste:

- 100: Rohrverbinder
- 101: Halteelement
- 102: Dichtlippe
- 103: Anschlag
- 104: haptisches Element
- 105: Einführschräge
- 106: flexibler Bereich
- 107: Rastelement
- 108: Nut
- 109: Anpressführung
- 110: Clips-Element
- 111: Steg
- 112: Rohrstück
- 113: komplementäres Verbindungselement
- 114: erste Aufnahme
- 115: zweite Aufnahme
- 116: Rohrendenaufnahme
- 117: Rastnase
- 118: Innenseite
- 119: Abstandshalter
- 120: Aussparung
- 121: Falten
- h100: Höhe Rohrverbinder
- b100: Breite Rohrverbinder
- t100: Tiefe Rohrverbinder
- d100: Durchmesser Rohrverbinder
- d102: Abstand Dichtlippen
- d103: Abstand Dichtlippen
- h102: Höhe Dichtlippen
- h103: Höhe Dichtlippen
- h104: Höhe Dichtlippen
- h110: Höhe Anpresspunkt
- h111: Höhe Steg
- t113: Tiefe Nut
- d113: Abstand Rohrstück
- d188: charakteristische Abmessung Rohr
- d189: charakteristische Abmessung Rohr
- d190: Abstand Rohrenden
- d191: Versatz
- d192: Abstand Rohrenden
- d193: Versatz
- α109: Winkel Anpressführung
- α190: Winkel Rohre
- X101: Symmetrieachse
- A: Ausschnitt

## Patentansprüche

1. Rohrverbinder (100) zum Verbinden mindestens zweier im Küchenbau verwendeter Rohre (112), wobei der Rohrverbinder (100) eine erste Aufnahme (114) mit einer ersten Einführöffnung zum Einführen eines Rohrs (112) und eine zweite Aufnahme (115) mit einer zweiten Einführöffnung zum Einführen eines Rohrs (112) aufweist, wobei der Rohrverbinder mindestens einen zwischen der ersten und der zweiten Einführöffnung an einer Innenseite (118) des Rohrverbinders (100) angeordneten, bevorzugt umlaufenden Anschlag (103) aufweist, der eine maximale Einführtiefe eines Rohrs (112) in die erste und/oder zweite Aufnahme (114, 115) festlegt, wobei der Rohrverbinder mindestens eine an der Innenseite (118) des Rohrverbinders zwischen der ersten oder der zweiten Einführöffnung und dem Anschlag (103) angeordnete, bevorzugt umlaufende, Dichtlippe (102) aufweist, , **dadurch gekennzeichnet, dass** der Rohrverbinder (100) einen zwischen der ersten und der zweiten Einführöffnung angeordneten flexiblen Bereich (106) aus einem verformbaren, stauchbaren oder dehnbaren und/oder elastischen Material aufweist, so dass die erste Aufnahme (114) relativ zu der zweiten Aufnahme (115) translatorisch und/oder rotatorisch verlagerbar ist, wobei der flexible Bereich (106) zumindest abschnittsweise einen Balg aufweist oder ist.

2. Rohrverbinder (100) nach Anspruch 1, bei dem der Rohrverbinder (100) mindestens ein Halteelement (101) aufweist, das bevorzugt an oder bei dem Anschlag (103) zumindest abschnittsweise angeordnet ist, wobei das Halteelement (101) dazu eingerichtet ist, ein in die erste und/oder die zweite Aufnahme eingeführtes Rohr (112) zumindest abschnittsweise oder punktuell mit dem Rohrverbinder (100) zu fixieren.

3. Rohrverbinder (100) nach Anspruch 2, bei dem das Halteelement (101) eine T-Form, L-Form oder C-Form aufweist wobei ein Steg (111) des Halteelements (101) mit der Innenseite (118) des Rohrverbinders (100) eine Rohrendenaufnahme (116) zur Aufnahme eines Rohrendes eines in die erste und/oder die zweite Aufnahme (114, 115) eingeführten Rohrs (112) bildet.

4. Rohrverbinder (100) nach Anspruch 3, bei dem mindestens eine der mindestens einen Dichtlippe (102) in der Rohrendenaufnahme (116) angeordnet ist, bevorzugt an der Innenseite (118) des Rohrverbinders (100) und/oder an dem Steg (111).

5. Rohrverbinder (100) nach Anspruch 3 oder 4, bei dem das Halteelement (101) und/oder der Steg (111) an einer der Innenseite (118) des Rohrverbinders (100) zugewandten Seite eine Anpressführung (109) aufweist, so dass ein Querschnitt der Rohrendenaufnahme (116) in Einführrichtung des Rohrendes zumindest abschnittsweise verjüngt ist.

6. Rohrverbinder (100) nach Anspruch 5, bei dem die Anpressführung zumindest abschnittsweise relativ zu der Innenseite (118) unter einem Winkel α₁₀₉ geneigt ist, wobei bevorzugt der Winkel 0° ≤ α₁₀₉ ≤ 20°, besonders bevorzugt 0° ≤ α₁₀₉ ≤ 15° beträgt, und/oder der Winkel α₁₀₉ bevorzugt Selbsthemmung bei einem in die Rohraufnahme (116) aufgenommenem Rohrende bewirkt.

7. Rohrverbinder (100) nach einem der vorangegangenen Ansprüche 2 bis 6, bei dem das Halteelement (101) ein Clips-Element (110) aufweist, so dass das Halteelement (101) bei in der Rohrendenaufnahme (116) aufgenommenem Rohr (112) über das Clips-Element (110) mit einem entsprechenden komplementären Verbindungselement (113) des Rohrendes und/oder des Rohrs (112) mit dem Rohr (112) lösbar verbunden ist.

8. Rohrverbinder (100) nach einem der vorangegangenen Ansprüche, der mindestens ein in der ersten und/oder zweiten Aufnahme (114, 115) bevorzugt an der Innenseite (118) angeordnetes Rastelement (107) aufweist, das dazu eingerichtet ist, mit einer komplementären Rastnase (117) eines in der Aufnahme (114, 115) eingeführten Rohrs (112) das Rohr (112) lösbar mit dem Rohrverbinder (100) zu verbinden.

9. Rohrverbinder (100) nach einem der vorangegangenen Ansprüche, der mindestens eine in der ersten und/oder zweiten Aufnahme (114, 115) bevorzugt an der Innenseite (118) angeordnetes Rohrverbinder-Clipselement aufweist, so dass der Rohrverbinder (100) mit einem in die erste und/oder zweite Aufnahme (114, 115) eingeführten Rohrs (112) lösbar verbindbar, bevorzugt verclipsbar, ist.

10. Rohrverbinder (100) nach einem der vorangegangenen Ansprüche, der mindestens eine, bevorzugt mindestens zwei, Symmetrieachse aufweist, um die der Rohrverbinder (100) achsensymmetrisch, spiegelsymmetrisch oder rotationssymmetrisch ist.

11. Rohrverbinder (100) nach einem der vorangegangenen Ansprüche 2 bis 10, der mindestens eine, bevorzugt mindestens zwei, Symmetrieachse aufweist, das Halteelement (101) achsensymmetrisch, spiegelsymmetrisch oder rotationssymmetrisch ist.

12. Rohrverbinder (100) nach einem der vorangegangenen Ansprüche, bei dem das Verhältnis einer Höhe (h₁₀₀), einer Breite (b₁₀₀) und/oder eines Durchmessers (d₁₀₀) zu einer Tiefe (t₁₀₀), h₁₀₀/t₁₀₀ ≥ 1.2, b₁₀₀/t₁₀₀ ≥ 2.5 und/oder d₁₀₀/t₁₀₀ ≥ 1.5 beträgt, bevorzugt h₁₀₀/t₁₀₀ ≥ 1.5, b₁₀₀/t₁₀₀ ≥ 3 und/oder d₁₀₀/t₁₀₀ ≥ 2.

13. Rohrverbinder (100) nach einem der vorangegangenen Ansprüche, der mindestens jeweils zwei Dichtlippen zwischen Anschlag (103) und erster Aufnahme (114) und zweiter Aufnahme (115) aufweist, wobei der Abstand (d₁₀₂) der jeweils zwei Dichtlippen zueinander kleiner als eine Länge (h₁₀₂) der Dichtlippen (102) ist.

14. Rohrverbinder (100) nach einem der vorangegangenen Ansprüche, bei dem der flexible Bereich (106) und/oder der Balg eckige Konturen (121) aufweist, wobei bevorzugt die Höhe der Konturen größer als der Abstand der Konturen (121) zueinander ist, wobei bevorzugt der flexible Bereich (106) und/oder der Balg mindestens eine nach außen weisende Kontur, besonders bevorzugt genau drei nach außen weisende Konturen aufweist.

15. Rohrverbinder (100) nach einem der vorangegangenen Ansprüche, dessen Außenseite ein steifes und/oder hartes Material mit einem ersten E-Modul ist oder aufweist und dessen Innenseite (118) ein verglichen mit dem Material der Außenseite ein weiches und/oder nachgiebiges Material mit einem zweiten E-modul ist oder aufweist, wobei bevorzugt der erste E-Modul größer als der zweite E-modul ist.

16. Rohrverbinder (100) nach einem der vorangegangenen Ansprüche, der einen ersten zwischen dem flexiblem Bereich (106) und der Einführungsöffnung der ersten Aufnahme (114) an der Innenseite (118) des Rohrverbinders (100) angeordneten, bevorzugt umlaufenden, Anschlag (103) und einen zweiten zwischen dem flexiblem Bereich (106) und der Einführungsöffnung der zweiten Aufnahme (115) an der Innenseite (118) des Rohrverbinders (100) angeordneten, bevorzugt umlaufenden, Anschlag (103) aufweist, wobei der Rohrverbinder (100) mindestens ein erstes an oder bei dem ersten Anschlag (103) an der Innenseite (118) zumindest abschnittsweise angeordnetes Halteelement (101) und mindestens ein zweites an oder bei dem zweiten Anschlag (103) an der Innenseite (118) zumindest abschnittsweise angeordnetes Halteelement (101) aufweist.

17. Rohrverbinder (100) nach einem der vorangegangenen Ansprüche, der mindestens zwei an der Innenseite (118) der ersten Aufnahme (114) und/oder der zweiten Aufnahme (115) angeordnete Dichtlippen (102) aufweist.

18. Rohrverbinder (100) nach einem der vorangegangenen Ansprüche, bei dem die erste Aufnahme (114) und/oder die zweite Aufnahme (115) an einer Außenkante eine bevorzugt umlaufende Einführschräge (105) aufweist, wobei die Querschnittsfläche der Aufnahme (114, 115) im Bereich der Einführschräge zumindest abschnittsweise verjüngt ist.

19. Anordnung aus einem Rohrverbinder (100) nach einem der vorangegangenen Ansprüche und mindestens zwei mit dem Rohrverbinder (100) über die erste und die zweite Aufnahme (114, 115) verbundenen Rohre (112), wobei
a. die Längsachsen der beiden Rohre relativ zueinander unter einem Winkel zwischen 1° und 15° ausgerichtet sind, und/oder
b. die Rohrenden der mit dem Rohrverbinder (100) verbundenen Rohre (112) einen Abstand und/oder Versatz entlang der Längsachse eines oder beider Rohre (112) aufweisen, der 1 bis 5 cm, bevorzugt 1 bis 2 cm, größer oder kleiner als eine oder die Tiefe t₁₀₀ des Rohrverbinders (100) ist, und/oder
c. die beiden Rohre (112) einen Abstand und/oder Versatz im Wesentlichen senkrecht zu der Längsachse der Rohre zueinander aufweisen, beispielsweise in Erstreckungsrichtung einer oder der Höhe h₁₀₀ des Rohrverbinders (100) und/oder einer oder der Breite b₁₀₀, der zwischen 1 bis 5 cm, bevorzugt zwischen 1 bis 2 cm beträgt.

20. Anordnung nach Anspruch 19, wobei
a. ein Außenquerschnitt und/oder Außenumfang der Rohre (112) größer als ein Innenquerschnitt mindestens einer der Aufnahmen (114, 115) ist, so dass mindestens ein Rohr (112) unter einer Presspassung in der mindestens einen Aufnahme (114, 115) mit dem Rohrverbinder (100) befestigt ist, und/oder
b. mindestens eine der Aufnahmen (114, 115) an einer Innenseite (118) mindestens ein oder das Rastelement (107) und mindestens eines der Rohre (112) mindestens eine oder die zu dem Rastelement (107) komplementäre Rastnase (117) aufweist, wobei das mindestens eine Rohr (112) in der mindestens einen Aufnahme (114, 115) durch die von dem Rastelement (107) und der Rastnase (117) gebildete Rastverbindung mit dem Rohrverbinder (100) lösbar befestigt ist, und/oder
c. mindestens eine der Aufnahmen (114, 115) an einer Innenseite (118) mindestens ein oder das Rohrverbinder-Clipselement aufweist, wobei das mindestens eine Rohr (112) in der mindestens einen Aufnahme (114, 115) über das Rohrverbinder-Clipselement mit dem Rohrverbinder (100) verclipst ist.

21. Anordnung nach einem der vorangegangenen Ansprüche 19 oder 20, mit weiterem Rückbezug auf einen der vorangegangenen Ansprüche 2 bis 7 oder 11, wobei
das Halteelement (101) mit einer Innenseite (118) des Rohrverbinders (100) an, bei oder in mindestens einer der Aufnahmen (114, 115) eine oder die Rohrendenaufnahme (116) bildet, wobei das in die Aufnahme (114, 115) eingeführte Rohr (112) mit einem oder dem Rohrende in der Rohrendenaufnahme (116) aufgenommen ist, wobei das Rohr (112) mit dem Rohrverbinder (100) über das Rohrende und der Rohrendenaufnahme (116) formschlüssig oder kraftschlüssig verbunden ist, und/oder
das Halteelement (101) mindestens ein oder das Clips-Element (110) und mindestens eines der Rohre (112) oder ein Rohrende mindestens eines der Rohre (112) ein oder das mit dem Clips-Element komplementäres Verbindungselement aufweist, wobei das Rohr (112) mit dem Rohrverbinder (100) über das Clips-Element und das komplementäre Verbindungselement lösbar verbunden ist.

## Claims

1. Pipe connector (100) for connecting at least two pipes (112) used in kitchen construction, wherein the pipe connector (100) has a first receptacle (114) with a first insertion opening for inserting a pipe (112) and a second receptacle (115) with a second insertion opening for inserting a pipe (112), wherein the pipe connector has at least one, preferably circumferential, stop (103) which is arranged between the first and the second insertion opening on an inner side (118) of the pipe connector (100) and which defines a maximum insertion depth of a pipe (112) into the first and/or second receptacle (114, 115), wherein the pipe connector has at least one, preferably circumferential, sealing lip (102) which is arranged on the inner side (118) of the pipe connector between the first or the second insertion opening and the stop (103), **characterized in that** the pipe connector (100) has a flexible region (106) which is arranged between the first and the second insertion opening and which is composed of a deformable, compressible or expandable and/or elastic material, with the result that the first receptacle (114) can be displaced translationally and/or rotationally relative to the second receptacle (115), wherein the flexible region (106) has or is a bellows at least in sections.

2. Pipe connector (100) according to claim 1, in which the pipe connector (100) has at least one holding element (101) which is preferably arranged at least in sections on or at the stop (103), wherein the holding element (101) is designed to fix a pipe (112) which is inserted into the first and/or the second receptacle at least in sections or at points to the pipe connector (100).

3. Pipe connector (100) according to claim 2, in which the holding element (101) has a T-shape, L-shape or C-shape, wherein a web (111) of the holding element (101) forms with the inner side (118) of the pipe connector (100) a pipe end receptacle (116) for receiving a pipe end of a pipe (112) which is inserted into the first and/or the second receptacle (114, 115).

4. Pipe connector (100) according to claim 3, in which at least one of the at least one sealing lips (102) is arranged in the pipe end receptacle (116), preferably on the inner side (118) of the pipe connector (100) and/or on the web (111).

5. Pipe connector (100) according to claim 3 or 4, in which the holding element (101) and/or the web (111) has a pressing guide (109) on a side facing the inner side (118) of the pipe connector (100), so that a cross section of the pipe end receptacle (116) is tapered at least in sections in the insertion direction of the pipe end.

6. Pipe connector (100) according to claim 5, in which the pressing guide is inclined at least in sections relative to the inner side (118) at an angle α₁₀₉, wherein preferably the angle 0° ≤ α₁₀₉ ≤ 20°, particularly preferably 0° ≤ α₁₀₉ ≤ 15°, and/or the angle α₁₀₉ preferably causes self-locking in the case of a pipe end which is received in the pipe receptacle (116).

7. Pipe connector (100) according to one of the preceding claims 2 to 6, in which the holding element (101) has a clip element (110), so that the holding element (101), when the pipe (112) is received in the pipe end receptacle (116), is detachably connected to the pipe (112) via the clip element (110) with a corresponding complementary connecting element (113) of the pipe end and/or of the pipe (112).

8. Pipe connector (100) according to one of the preceding claims, which has at least one latching element (107) which is preferably arranged on the inner side (118) in the first and/or second receptacle (114, 115) and which is designed to detachably connect the pipe (112) to the pipe connector (100) with a complementary latching lug (117) of a pipe (112) which is inserted in the receptacle (114, 115).

9. Pipe connector (100) according to one of the preceding claims, which has at least one pipe connector clip element which is preferably arranged on the inner side (118) in the first and/or second receptacle (114, 115), so that the pipe connector (100) can be detachably connected, preferably clipped, to a pipe (112) which is inserted into the first and/or second receptacle (114, 115).

10. Pipe connector (100) according to one of the preceding claims, which has at least one, preferably at least two, axis of symmetry about which the pipe connector (100) is axis-symmetrical, mirror-symmetrical or rotationally symmetrical.

11. Pipe connector (100) according to one of the preceding claims 2 to 10, which has at least one, preferably at least two, axis of symmetry, the holding element (101) is axis-symmetrical, mirror-symmetrical or rotationally symmetrical.

12. Pipe connector (100) according to one of the preceding claims, in which the ratio of a height (h₁₀₀), a width (b₁₀₀) and/or a diameter (d₁₀₀) to a depth (t₁₀₀), h₁₀₀/t₁₀₀ ≥ 1.2, b₁₀₀/t₁₀₀ ≥ 2.5 and/or d₁₀₀/t₁₀₀ ≥ 1.5, preferably h₁₀₀/t₁₀₀ ≥ 1.5, b₁₀₀/t₁₀₀ ≥ 3 and/or d₁₀₀/t₁₀₀ ≥ 2.

13. Pipe connector (100) according to one of the preceding claims, which has at least in each case two sealing lips between stop (103) and first receptacle (114) and second receptacle (115), wherein the distance (d₁₀₂) between the in each case two sealing lips is smaller than a length (h₁₀₂) of the sealing lips (102).

14. Pipe connector (100) according to one of the preceding claims, in which the flexible region (106) and/or the bellows has angular contours (121), wherein preferably the height of the contours is greater than the distance between the contours (121), wherein preferably the flexible region (106) and/or the bellows has at least one outwardly pointing contour, particularly preferably exactly three outwardly pointing contours.

15. Pipe connector (100) according to one of the preceding claims, the outer side of which is or has a rigid and/or hard material with a first modulus of elasticity and the inner side (118) of which is or has a soft and/or flexible material with a second modulus of elasticity compared to the material of the outer side, wherein preferably the first modulus of elasticity is greater than the second modulus of elasticity.

16. Pipe connector (100) according to one of the preceding claims, which has a first, preferably circumferential, stop (103) arranged between the flexible region (106) and the insertion opening of the first receptacle (114) on the inner side (118) of the pipe connector (100) and a second, preferably circumferential, stop (103) arranged between the flexible region (106) and the insertion opening of the second receptacle (115) on the inner side (118) of the pipe connector (100), wherein the pipe connector (100) has at least one first holding element (101) arranged at least in sections on or at the first stop (103) on the inner side (118) and at least one second holding element (101) arranged at least in sections on or at the second stop (103) on the inner side (118).

17. Pipe connector (100) according to one of the preceding claims, which has at least two sealing lips (102) arranged on the inner side (118) of the first receptacle (114) and/or of the second receptacle (115).

18. Pipe connector (100) according to one of the preceding claims, in which the first receptacle (114) and/or the second receptacle (115) has a preferably circumferential insertion bevel (105) on an outer edge, wherein the cross-sectional area of the receptacle (114, 115) is tapered at least in sections in the region of the insertion bevel.

19. Arrangement comprising a pipe connector (100) according to one of the preceding claims and at least two pipes (112) connected to the pipe connector (100) via the first and the second receptacle (114, 115), wherein
a. the longitudinal axes of the two pipes are oriented relative to one another at an angle between 1° and 15°, and/or
b. the pipe ends of the pipes (112) connected to the pipe connector (100) have a distance and/or offset along the longitudinal axis of one or both pipes (112) which is 1 to 5 cm, preferably 1 to 2 cm, greater or less than a or the depth t₁₀₀ of the pipe connector (100), and/or
c. the two pipes (112) have a distance and/or offset from one another substantially perpendicular to the longitudinal axis of the pipes, for example in the direction of extent of a or the height h₁₀₀ of the pipe connector (100) and/or a or the width b₁₀₀, which is between 1 to 5 cm, preferably between 1 to 2 cm.

20. Arrangement according to claim 19, wherein
a. an outer cross section and/or outer circumference of the pipes (112) is greater than an inner cross section of at least one of the receptacles (114, 115), so that at least one pipe (112) is fastened to the pipe connector (100) with a press fit in the at least one receptacle (114, 115), and/or
b. at least one of the receptacles (114, 115) has, on an inner side (118), at least one or the latching element (107) and at least one of the pipes (112) has at least one or the latching lug (117) which is complementary to the latching element (107), wherein the at least one pipe (112) is detachably fastened to the pipe connector (100) in the at least one receptacle (114, 115) by the latching connection formed by the latching element (107) and the latching lug (117), and/or
c. at least one of the receptacles (114, 115) has, on an inner side (118), at least one or the pipe connector clip element, wherein the at least one pipe (112) is clipped to the pipe connector (100) in the at least one receptacle (114, 115) via the pipe connector clip element.

21. Arrangement according to one of the preceding claims 19 or 20, with further reference to one of the preceding claims 2 to 7 or 11, wherein
the holding element (101) forms with an inner side (118) of the pipe connector (100) on, at or in at least one of the receptacles (114, 115) a or the pipe end receptacle (116), wherein the pipe (112) which is inserted into the receptacle (114, 115) is received with one or the pipe end in the pipe end receptacle (116), wherein the pipe (112) is connected to the pipe connector (100) via the pipe end and the pipe end receptacle (116) in a form-fitting or force-fitting manner, and/or
the holding element (101) has at least one or the clip element (110) and at least one of the pipes (112) or a pipe end of at least one of the pipes (112) has a or the connecting element which is complementary to the clip element, wherein the pipe (112) is detachably connected to the pipe connector (100) via the clip element and the complementary connecting element.

## Revendications

1. . Raccord de tuyaux (100) pour relier au moins deux tuyaux (112) utilisés dans la construction de cuisines, le raccord de tuyaux (100) présentant un premier logement (114) avec un premier orifice d'introduction pour introduire un tuyau (112) et un deuxième logement (115) avec un deuxième orifice d'introduction pour introduire un tuyau (112), le raccord de tuyaux présentant au moins une butée (103), de préférence circonférentielle, agencée entre le premier et le deuxième orifices d'introduction sur un côté intérieur (118) du raccord de tuyaux (100), qui définit une profondeur d'introduction maximale d'un tuyau (112) dans le premier et/ou le deuxième logement (114, 115), le raccord de tuyaux présentant au moins une lèvre d'étanchéité (102), de préférence circonférentielle, agencée sur le côté intérieur (118) du raccord de tuyaux entre le premier ou le deuxième orifice d'introduction et la butée (103), **caractérisé en ce que** le raccord de tuyaux (100) présente une zone flexible (106), agencée entre le premier et le deuxième orifices d'introduction, constituée d'un matériau déformable, compressible ou extensible et/ou élastique, de sorte que le premier logement (114) peut être déplacé en translation et/ou en rotation par rapport au deuxième logement (115), la zone flexible (106) présentant un soufflet ou étant au moins par sections un soufflet.

2. . Raccord de tuyaux (100) selon la revendication 1, le raccord de tuyaux (100) présentant au moins un élément de retenue (101), qui est agencé de préférence sur ou près de la butée (103) au moins par sections, l'élément de retenue (101) étant conçu pour fixer un tuyau (112) introduit dans le premier et/ou le deuxième logement au moins par sections ou ponctuellement avec le raccord de tuyaux (100).

3. . Raccord de tuyaux (100) selon la revendication 2, dans lequel l'élément de retenue (101) présente une forme en T, une forme en L ou une forme en C, une nervure (111) de l'élément de retenue (101) formant avec le côté intérieur (118) du raccord de tuyaux (100) un logement d'extrémité de tuyau (116) pour recevoir une extrémité de tuyau d'un tuyau (112) inséré dans le premier et/ou le deuxième logement(s) (114, 115).

4. . Raccord de tuyaux (100) selon la revendication 3, dans lequel au moins une de l'au moins une lèvre d'étanchéité (102) est agencée dans le logement d'extrémité de tuyau (116), de préférence sur le côté intérieur (118) du raccord de tuyaux (100) et/ou sur la nervure (111).

5. . Raccord de tuyaux (100) selon la revendication 3 ou 4, dans lequel l'élément de retenue (101) et/ou la nervure (111) présente un guidage par pression (109) sur un côté tourné vers le côté intérieur (118) du raccord de tuyaux (100), de sorte qu'une section transversale du logement d'extrémité de tuyau (116) est rétrécie au moins par sections dans la direction d'introduction de l'extrémité de tuyau.

6. . Raccord de tuyaux (100) selon la revendication 5, dans lequel le guidage par pression est incliné au moins par sections par rapport au côté intérieur (118) selon un angle a₁₀₉, l'angle o° ≤ a₁₀₉ ≤ 20°, en particulier o° ≤ a₁₀₉ ≤ 15°, et/ou l'angle a₁₀₉ provoquant de préférence un autoblocage lorsqu'une extrémité de tuyau est logée dans le logement de tuyau (116).

7. . Raccord de tuyaux (100) selon l'une quelconque des revendications 2 à 6 précédentes, dans lequel l'élément de retenue (101) comprend un élément de clipsage (110), de sorte que lorsque le tuyau (112) est logé dans le logement d'extrémité de tuyau (116), l'élément de retenue (101) est relié de manière amovible au tuyau (112) par l'intermédiaire de l'élément de clipsage (110) à un élément de liaison complémentaire correspondant (113) de l'extrémité de tuyau et/ou du tuyau (112).

8. . Raccord de tuyaux (100) selon l'une des revendications précédentes, qui présente au moins un élément d'encliquetage (107) agencé dans le premier et/ou le deuxième logements (114, 115), de préférence sur le côté intérieur (118), qui est agencé pour relier de manière amovible, avec un ergot d'encliquetage complémentaire (117) d'un tuyau (112) inséré dans le logement (114, 115), le tuyau (112) au raccord de tuyaux (100).

9. . Raccord de tuyaux (100) selon l'une des revendications précédentes, qui présente au moins un élément de clipsage de raccord de tuyaux agencé dans le premier et/ou le deuxième logements (114, 115), de préférence sur le côté intérieur (118), de sorte
que le raccord de tuyaux (100) peut être relié de manière amovible, de préférence par clipsage, à un tuyau (112) introduit dans le premier et/ou le deuxième logements (114, 115).

10. . Raccord de tuyaux (100) selon l'une des revendications précédentes, qui présente au moins un, de préférence au moins deux, axes de symétrie autour desquels le raccord de tuyaux (100) présente une symétrie axiale, une symétrie spéculaire ou une symétrie de rotation.

11. . Raccord de tuyaux (100) selon l'une des revendications 2 à 10 précédentes, qui présente au moins un axe de symétrie, de préférence au moins deux axes de symétrie, l'élément de retenue (101) étant à symétrie axiale, à symétrie spéculaire ou à symétrie de révolution.

12. . Raccord de tuyaux (100) selon l'une quelconque des revendications précédentes, dans lequel le rapport d'une hauteur (h₁₀₀), d'une largeur (b₁₀₀) et/ou d'un diamètre (d₁₀₀) sur une profondeur (t₁₀₀) est h₁₀₀/t₁₀₀ ≥1,2, b₁₀₀/t₁₀₀ ≥ 2,5 et/ou d₁₀₀/t₁₀₀ ≥ 1,5, de préférence h₁₀₀/t₁₀₀ ≥ 1,5, b₁₀₀/t₁₀₀ ≥ 3 et/ou d₁₀₀/t₁₀₀ ≥ 2.

13. . Raccord de tuyaux (100) selon l'une des revendications précédentes, qui présente au moins respectivement deux lèvres d'étanchéité entre la butée (103) et le premier logement (114) et le deuxième logement (115), la distance (d₁₀₂) entre deux lèvres d'étanchéité étant à chaque fois inférieure à une longueur (h₁₀₂) des lèvres d'étanchéité (102).

14. . Raccord de tuyaux (100) selon l'une des revendications précédentes, dans lequel la zone flexible (106) et/ou le soufflet présentent des contours angulaires (121), la hauteur des contours étant de préférence supérieure à la distance entre les contours (121), la zone flexible (106) et/ou le soufflet présentant de préférence au moins un contour orienté vers l'extérieur, de préférence, en particulier, exactement trois contours orientés vers l'extérieur.

15. . Raccord de tuyaux (100) selon l'une des revendications précédentes, dont le côté extérieur est ou présente un matériau rigide et/ou dur avec un premier module E et dont le côté intérieur (118) est ou présente un matériau souple et/ou flexible avec un deuxième module E par rapport au matériau du côté extérieur, le premier module E étant de préférence plus gros que le deuxième module E.

16. . Raccord de tuyaux (100) selon l'une des revendications précédentes, qui comprend une première butée (103), de préférence circonférentielle, agencée entre la zone flexible (106) et l'orifice d'introduction du premier logement (114) sur le côté intérieur (118) du raccord de tuyaux (100), et une deuxième butée (103), de préférence circonférentielle, agencée entre la zone flexible (106) et l'orifice d'introduction du deuxième logement (115) sur le côté intérieur (118) du raccord de tuyaux (100), de préférence circonférentiel, le raccord de tuyaux (100) présentant au moins un premier élément de retenue (101) agencé au moins par sections sur ou près de la première butée (103) sur le côté intérieur (118) et au moins un deuxième élément de retenue (101) agencé au moins par sections sur ou près de la deuxième butée (103) sur le côté intérieur (118).

17. . Raccord de tuyaux (100) selon l'une des revendications précédentes, comprenant au moins deux lèvres d'étanchéité (102) agencées sur le côté intérieur (118) du premier logement (114) et/ou du deuxième logement (115).

18. . Raccord de tuyaux (100) selon l'une des revendications précédentes, dans lequel le premier logement (114) et/ou le deuxième logement(s) (115) présente(nt) sur un bord extérieur un chanfrein d'introduction (105) de préférence circonférentiel, la surface de la section transversale du logement (114, 115) étant rétrécie au moins par sections dans la zone du chanfrein d'introduction.

19. . Assemblage constitué d'un raccord de tuyaux (100) selon l'une des revendications précédentes et d'au moins deux tuyaux (112) reliés au raccord de tuyaux (100) via le premier et le deuxième logements (114, 115), dans lequel
a. les axes longitudinaux des deux tuyaux sont orientés l'un par rapport à l'autre selon un angle compris entre 1 et 15°, et/ou
b. les extrémités des tuyaux (112) reliées au raccord de tuyaux (100) présentent une distance et/ou un décalage le long de l'axe longitudinal de l'un
ou des deux tuyaux (112), qui est supérieur ou inférieur d'1 à 5 cm, de préférence d'1 à 2 cm, à l'une des profondeurs ou à la profondeur t₁₀₀ du raccord de tuyaux (100), et/ou
c. les deux tuyaux (112) présentent une distance et/ou un décalage
sensiblement perpendiculaire à l'axe longitudinal des tuyaux l'un par rapport à l'autre, par exemple dans la direction d'extension d'un tuyau ou de la hauteur h100 du raccord de tuyaux (100) et/ou d'une largeur ou de la largeur b₁₀₀, qui est comprise entre 1 et 5 cm, de préférence entre 1 et 2 cm.

20. . Assemblage selon la revendication 19, dans lequel
a. une section transversale extérieure et/ou une circonférence extérieure des tuyaux (112) est plus gros qu'une section transversale intérieure d'au moins un des logements (114, 115), de sorte qu'au moins un tuyau (112) est fixé avec le raccord de tuyaux (100) sous un ajustement serré dans l'au moins un logement (114, 115), et/ou
b. au moins l'un des logements (114, 115) présente sur un côté intérieur (118) au moins un élément d'encliquetage ou l'élément d'encliquetage (107) et au moins l'un des tuyaux (112) présente au moins un ergot d'encliquetage ou l'ergot d'encliquetage (117) complémentaire à l'élément d'encliquetage (107), l'au moins un tuyau (112) étant fixé de manière amovible dans l'au moins un logement (114, 115) par la liaison par encliquetage formée par l'élément d'encliquetage (107) et l'ergot d'encliquetage (117) avec le raccord de tuyaux (100), et/ou
c. au moins l'un des logements (114, 115) présente sur un côté intérieur (118)
au moins un élément de clipsage ou l'élément de clipsage de raccord de tuyaux, l'au moins un tuyau (112) étant clipsé dans l'au moins un logement (114, 115) via l'élément de clipsage de raccord de tuyaux avec le raccord de tuyaux (100).

21. . Assemblage selon l'une des revendications 19 ou 20 précédentes,
qui se réfère en outre à l'une des revendications 2 à 7 ou 11 précédentes,
l'élément de retenue (101) formant avec un côté intérieur (118) du raccord de tuyaux (100) sur, près ou dans au moins l'un des logements (114, 115) un logement d'extrémité ou le logement d'extrémité du tuyau (116), le tuyau (112) introduit dans le logement (114, 115) étant reçu avec une ou l'extrémité de tuyau dans le logement d'extrémité de tuyau (116), le tuyau (112) étant relié au raccord de tuyaux (100) via l'extrémité de tuyau et le logement d'extrémité de tuyau (116) par complémentarité de forme ou par force, et/ou
l'élément de retenue (101) comprenant au moins un élément de clipsage ou l'élément de clipsage (110) et au moins l'un des tuyaux (112) ou une extrémité de tuyau d'au moins l'un des tuyaux (112) comprenant un élément de liaison ou l'élément de liaison complémentaire à l'élément de clipsage, le tuyau (112) étant connecté de manière amovible au connecteur de tuyau (100) via l'élément de clipsage et l'élément de liaison complémentaire.
